(19) Europäisches Patentamt / European Patent Office / Office européen des brevets

(11) **EP 3 543 932 A2**

(12) **EUROPEAN PATENT APPLICATION**
published in accordance with Art. 153(4) EPC

(43) Date of publication:
**25.09.2019 Bulletin 2019/39**

(51) Int Cl.:
*G06Q 20/30* (2012.01)   *G06F 21/60* (2013.01)
*G06Q 20/38* (2012.01)

(21) Application number: **17871677.5**

(22) Date of filing: **15.11.2017**

(86) International application number:
**PCT/JP2017/041101**

(87) International publication number:
**WO 2018/092809 (24.05.2018 Gazette 2018/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **15.11.2016   JP 2016222193**

(71) Applicant: **NTI, Inc.**
**Yokkaichi-shi**
**Mie 510-8021 (JP)**

(72) Inventor: **NAKAMURA, Takatoshi**
**Yokkaichi-shi**
**Mie 510-8021 (JP)**

(74) Representative: **Gill Jennings & Every LLP**
**The Broadgate Tower**
**20 Primrose Street**
**London EC2A 2ES (GB)**

(54) **USER TERMINAL, METHOD, AND COMPUTER PROGRAM**

(57)    A technique of securely handing over money information which is information having monetary value, recorded within a portable user terminal, to a person who is to receive payment from a person who makes payment is proposed. A one-time password as money information to be displayed on a display 101 of the user terminal is displayed fully in a length in a vertical direction of an image I1 which has a larger length in the vertical direction than that of the display 101. The image I1 can be scrolled in the vertical direction with respect to the display 101, so that the whole of the one-time password can be browsed. Meanwhile, there is no moment at which the whole of the one-time password is displayed on the display 101 at the same time.

FIG. 21

**Description**

**Technical Field**

The present invention relates to a technique for allowing a person who makes payment to securely present money information which is information having monetary value to a person who is to receive the payment in a new settlement system which is a substitute for a credit card.

**Background Art**

The present inventor proposes a new settlement system which is a substitute for a credit card. This is a settlement system including user terminals, settlement terminals, and a settlement device which can perform communication with the user terminals and the settlement terminals via the Internet and other networks.

Applications of the settlement system are filed as Japanese patent applications, for example, as Japanese Patent Application No. 2015-243564, Japanese Patent Application No. 2015-250700, Japanese Patent Application No. 2015-256028, or the like.

Outline of these settlement systems will be simply described. The user terminal, which is possessed by a user who makes payment, includes a computer, and is typically a smartphone or a tablet. The settlement terminal, which is managed by a person who is to receive the payment, such as, for example, a clerk (manager, or the like,) of a store and a restaurant, corresponds to a credit card reader and a computer connected to the credit card reader if the settlement system is compared to a conventional system using a credit card. The settlement device is a device which determines whether or not to make settlement, and, in the conventional system using a credit card, corresponds to a computer which is managed by a credit card company.

To make settlement in such a settlement system, a user transmits amount information which is information regarding an amount that the user desires to pay to a manager, or the like, and user information which is information for specifying the user or the user terminal of the user, from the user terminal to the settlement device via the Internet. The settlement device which receives the information, for example, authenticates the user using the user information and performs credit determination as to whether the user can pay the amount specified by the amount information transmitted from the user. The credit determination can be performed in accordance with a degree of accumulation of credit of the user regarding various items in a similar manner to credit determination in a conventional case of using a credit card, or can be performed in accordance with balance in a bank account of the user simply designated by the user and the amount specified by the amount information as put to practical use in a debit card. In either case, if a result of the credit determination is positive, the settlement system tentatively determines payment of the user, and tentative allowance information which is information indicating that payment is tentatively determined is transmitted from the settlement device to the user terminal.

If the user terminal receives the tentative allowance information, the user terminal generates a one-time password. The one-time password is numbers, characters, symbols, or the like, or enumeration of the numbers, characters, symbols, or the like, and has, for example, the number of digits from approximately 10 digits to 100 digits or more digits. For example, in a field of internet banking, a technique of causing a one-time password to be generated using a token is publicly known. As a technique for causing the user terminal to generate a one-time password, it is possible to use such a publicly-known or well-known technique. The one-time password is generated every time the user desires to make payment using this settlement system, and is generated a number of times. The user terminal incorporates a function for generating such a one-time password as, for example, a software token.

The user hands over the one-time password generated at the user terminal to the manager, or the like, of the settlement device who is a counterpart who is to receive the payment from the user. Such handing over of the one-time password from the user to the manager, or the like, corresponds to handing over of a credit card number from the user to the manager, or the like, in a conventional system using a credit card. The manager, or the like, inputs the one-time password received from the user in the settlement terminal using some kinds of means and transmits the one-time password to the settlement device via the Internet.

Here, the settlement device is designed so as to be able to generate a one-time password which is the same as the one-time password generated with each token as in the above-described technique using a token in a field of Internet banking. If the one-time password transmitted from the settlement terminal matches the one-time password generated within the settlement device, the settlement device acknowledges that the one-time password is valid. As described above, before the one-time password is generated at the user terminal, an amount of money the user desires to pay using the one-time password is specified in advance by the amount information. In a case where the settlement device acknowledges that the one-time password is valid, the settlement device pays an amount corresponding to the amount information or makes settlement corresponding to the amount information associated with the one-time password to the manager of the settlement terminal. Of course, in a case where the one-time password generated by the settlement device does not match the one-time password transmitted from the user via the settlement terminal, the settlement device does not allow the settlement.

As described above, in the settlement system, unlike with a normal credit card in which a credit card number is not associated with an amount to be paid, a one-time password which has one-to-one correspondence with an amount to be paid is generated at the user terminal and the settlement device, the one-time password generated at the user terminal is used as a temporal credit card number for allowing payment of a certain amount, for example, only once.

While, in a conventional credit card system, if the credit card number is stolen by a malicious third party, it is impossible to prevent abuse by the third party, such a settlement system has an advantage that, by using a one-time password which only functions as a temporal credit card number as a substitute for the credit card number, security is dramatically increased compared to the conventional settlement system using a credit card.

However, as a result of further consideration on such a settlement system, the present inventor has noticed that such a settlement system has a greater potential in addition to the above-described advantage.

It is a potential of the one-time password generated at the user terminal. In a normal credit card, as described above, there is no relationship between a credit card number of the credit card and an amount which can be paid with the credit card. While, of course, also in the credit card number, there exists a ceiling of an amount which can be paid with the credit card number, a limit of payment for each time does not normally exist in the credit card number. Meanwhile, in the one-time password generated at the user terminal in the above-described settlement system devised by the present inventor, an amount of payment which can be made with, for example, the one-time password for making payment only once is determined.

It is said that the essence of currency lies in that currency can be a medium of exchange of value, and that value can be stored over time. If so, the above-described one-time password has property as currency because payment can be made by issuance of the one-time password, and value can be stored at least until the one-time password is handed over to the manager of the settlement terminal. That is, the above-described one-time password can function as so-called virtual currency.

### Summary of Invention

### Technical Problem

By the way, in the above-described one-time password, enumeration itself such as numbers which constitute the one-time password, that is, information itself has monetary value. Such value has characteristics that the value can be immaterial (does not have a physical object). Handing over of such value from a person who makes payment to a person who is to receive the payment in a case where payment is made is typically performed by presentation of the one-time password in a similar manner to settlement using a credit card in which the credit card number is presented from a person who makes payment to a person who is to receive the payment. For example, by the person who makes payment showing the one-time password displayed on a display of the user terminal to the person who is to receive the payment, it is possible to realize presentation of the one-time password. The person who is to receive the payment can see the one-time password with the naked eyes or can recognize the one-time password using appropriate equipment such as a camera and a barcode reader.

While a feature that it is possible to hand over the one-time password using such a simple method is a great advantage of this technique, a weak point can also occur. Then, to spread such a technique, a slight weak point should not be left. Because such a technique relates to payment of money, it can be considered that spread of this technique requires higher security than that required in conventional currency.

Examples of the weak point assumed in such a technique can include the following. As described above, the one-time password having monetary value is just information, and is immaterial. Therefore, also in a case where the one-time password is stolen, unlike with a case where the conventional currency which is material is stolen, it can be considered that the person who makes payment does not notice a fact itself that the one-time password is stolen. As described above, while the one-time password is assumed to be presented to the person who is to receive the payment in a state where, for example, the one-time password is displayed on a display of the user terminal possessed by the person who makes payment, there is a possibility that the one-time password displayed on the display of the user terminal may be known by a third party before the payment is actually made. A malicious third party can know the one-time password by sneaking a peek at or secretly photographing using a camera the one-time password displayed on the display. In a case where a malicious third party knows the one-time password and makes payment using the one-time password prior to a valid user, the valid user cannot make payment using the one-time password possessed by the user.

Such a problem is not limited to the settlement system as described above devised by the present inventor, or to a generation method of the one-time password, and is typically common in virtual currency in which information itself has monetary value.

A problem to be solved by the present invention is to provide a technique for further generalizing virtual currency in which information itself has monetary value, and, in more detail, a technique of preventing information having monetary value displayed on the display of the user terminal which is the terminal device used by the user from being stolen by a malicious third party.

**Solution to Problem**

To solve such a problem, the present inventor proposes the invention described below. The present invention is roughly divided into two inventions. For convenience sake, these will be referred to as a first invention and a second invention.

The first invention is a portable user terminal including a display on which an image can be displayed and display control means which controls an image to be displayed on the display, and is the user terminal in which the display control means is configured to be able to display a money image which is an image including money information which is comprised of numbers, characters, symbols or enumeration of two or more types of the numbers, the characters and the symbols, and which is information having monetary value, on the display, and is configured to control the image to be displayed on the display so that all the money information is not displayed on the display at the same time.

Note that there is a case where the money information in the present invention is used as a typical substitute for information in which monetary value (in a more limited sense, monetary value which can be used for settlement) can be recognized regardless of name such as virtual currency, crypto currency, regional currency, a money coupon, a coupon ticket, a certificate and a deed. Further, a word of "user terminal" in the present invention is merely a word selected for using consistent words with description in Background Art, and means a portable terminal which is used by the user when being used, and does not necessarily require that the user should have its possession. The user terminal is a portable computer, typically, a smartphone, a tablet, or the like.

While, with such a user terminal, the user can display all the money information which is information having monetary value, for example, a one-time password described in Background Art, on the display of the user terminal, because all the money information is not displayed on the display at the same time, the money information is less likely to be stolen by a malicious third party sneaking a peek at or secretly photographing all the money information. Of course, while it is difficult to completely exclude a possibility that the money information is stolen by a malicious third party by sneaking a peek at or secretly photographing the display of the user terminal until the user displays all the money information on the display, a possibility that the money information is stolen is relatively extremely lower than that in the case where all the money information is displayed on the display at the same time.

The person who sees the money information displayed on the display and who is to receive the payment can, for example, visually know all the money information displayed on the display over time and can input the money information to the settlement terminal which is a device transmitting the money information to the settlement device via the Internet, by himself/herself using an input device such as a numerical keypad and a keyboard, as described in Background Art. Alternatively, the person who is to receive the payment can obtain image data by photographing all the money information displayed on the display and can input the money information read from the image data to the settlement terminal as described above.

Note that payment conditions (for example, a deadline for payment) for allowing payment using the money information may be provided in the money information. By such payment conditions being provided, such money information keeps a distance from typical currency.

As described above, all the money information is not displayed at the same time on the display of the user terminal in the first invention of the present invention. Inversely, all the money information is displayed on the display by spending a certain period.

The user terminal may include input means which allows the user to perform input, the display control means may be configured to change an image displayed on the display on condition that there is input from the input means, so that all the money information may be displayed on the display as predetermined time passes. In this manner, it is possible to reflect user's intention in determination of a timing for displaying all the money information on the display.

The display control means may be configured to automatically change the image displayed on the display as time passes, so that all the money information may be displayed on the display as predetermined time passes. In this manner, it is also possible not to reflect user's intention in determination of a timing for displaying all the money information on the display.

As described above, there is a case where the user terminal in the first invention includes the input means. In that case, the money image can be displayed, for example, as follows.

For example, the display control means may be configured to make the money image larger than a display range of the display and may allow all the money information to be browsed on the display only in the case where the user scrolls the money image by performing input from the input means. For example, this case corresponds to a case where the money image is an image in which the money information which is numbers described in a line is drawn in a range exceeding the display in a vertical direction, and all the money information is displayed by the user longitudinally scrolling the money image displayed on the display. In the case where all the money information is allowed to be browsed on the display only in the case where the money image is scrolled, the money information may be combination of a plurality of pieces of sub-money information, and the respective pieces of the sub-money information may be disposed at different locations in the money image. In a case where the money information is formed with, for example, numbers of 10 digits (or 10 characters), or the like, for example, the first 5 digits (corresponding to one piece of the sub-money information) among them can be horizontally indicated in an upper part of the money image, and the last 5 digits (also corresponding to one piece of the sub-money information) can be horizontally indicated in a lower part of the money image. If both the sub-money information in the first 5 digits and the sub-money information in the last 5 digits cannot be displayed on the display, and both the sub-money information can be browsed by the user scrolling the money image in a longitudinal direction, as a result, the user can browse all the money information on the display.

Further, the display control means may be configured to display the money image on the display in a state where a plurality of sub-money images respectively including sub-money information which is at least part of the money information are overlapped with each other, the money information is formed by combining the sub-money information included in all the sub-money images, and the sub-money information in the sub-money image disposed in a lower layer is invisible through the sub-money image disposed in an upper layer of the sub-money image, and be configured to allow all the sub-money information to be browsed on the display by the user respectively scrolling the sub-money images to cause all the sub-money images to be displayed on the display. In this case, a plurality of sub-money images in which the respective pieces of sub-money information are indicated are overlapped with each other in a hierarchical manner as in a layer structure in image processing. The user can browse all the money information on the display by browsing the respective sub-money images on the display.

Further, the display control means may be configured to allow all the sub-money information to be browsed on the display by generating the money image as an image including in part sub-money information which is at least part of the money information and changing the sub-money information every time there is input from the input means, and by causing the money information to be displayed on the display until all pieces of the sub-money information displayed so far are combined to be the money information. In an example in this case, a button which encourages the user to perform clicking is provided on the money image, and the sub-money information is sequentially displayed every time the user clicks the button. The whole money image may be updated every time the button is clicked, and the sub-money information embedded in the money image may be sequentially displayed. Of course, the button is an example.

Note that the above-described example assumes existence of the input means, and the money image, or the like, is changed through input from the input means. However, as mentioned above, user input from the input means is not necessarily essential to change the money image, or the like, and it is also possible to automatically change the money image, or the like, as mentioned above without the user's intention being reflected.

The display control means may be configured to display the face of a person who is to make payment using the money information in the money image.

According to such a user terminal, even in a case where the user terminal itself is handed over to a malicious third party, because a person who is to receive the payment can authenticate an owner of the user terminal using a face image (a face photo) when the person browses the money image displayed on the display of the user terminal, the money information is less likely to be abused.

The present inventor also proposes a method to be executed at the user terminal as one aspect of the first invention. An effect by such a method is the same as the user terminal by the first invention.

An example of such a method is a method to be executed at a computer of a portable user terminal including a display on which an image can be displayed and the computer which controls an image to be displayed on the display. This method includes a step of displaying on the display a money image which is an image including money information which is comprised of numbers, characters, symbols or enumeration of two or more types of the numbers, the characters and the symbols, and which is information having monetary value, to be executed by the computer, and in the step of displaying the money image on the display, the money image is displayed on the display so that all the money information is not displayed on the display at the same time.

The present inventor proposes, for example, a computer program for causing a general-purpose portable computer to function as the user terminal by the first invention as one aspect of the first invention of the present invention.

One example of such a computer program is a computer program for causing a portable computer including a display on which an image can be displayed and the computer which controls an image to be displayed on the display to execute a step of displaying on the display a money image which is an image including money information which is comprised of numbers, characters, symbols, or enumeration of two or more types of the numbers, the characters and the symbols, and which is information having monetary value, and in the step of displaying the money image on the display, the computer displays the money image on the display so that all the money information is not displayed on the display at the same time.

The second invention of the present invention is as follows.

The second invention is a portable user terminal including a display on which an image can be displayed and

display control means which controls an image to be displayed on the display, and the display control means is configured to be able to display a money specifying information image which is an image including money specifying information which is comprised of numbers, characters, symbols or enumeration of two or more types of the numbers, the characters and the symbols, and which is information specifying money information which is information having monetary value, and is configured to controls an image to be displayed on the display so that all the money specifying information is not displayed on the display at the same time.

While, in the first invention, the money information itself is displayed on the display, in the second invention, in place of the money information, the money specifying information which is information for specifying the money information is displayed on the display. Here, the display control means in the second invention controls an image to be displayed on the display so that, when the money specifying information image which is an image including the money specifying information is displayed on the display, all the money specifying information is not displayed on the display at the same time. That is, in a similar manner to the first invention in which all the money information is not displayed on the display of the user terminal at the same time, in the second invention, all the money specifying information is not displayed on the display at the same time. By this means, for a reason similar to that of the user terminal in the first invention, with the user terminal in the second invention, it is possible to reduce a possibility that the money information is stolen by a malicious third party. Moreover, because not the money information itself but the money specifying information is displayed on the display of the user terminal in the second invention, and the money specifying information can be made information which is difficult to be read by at least a person with the naked eyes, it can be said that a possibility that the money information is stolen by a malicious third party in a case where the user terminal in the second invention is used is lower than that in a case where the user terminal in the first invention is used.

An example of the money specifying information is a one-dimensional or two-dimensional barcode. Of course, it is also possible to employ other information as the specifying information.

A person to whom the money specifying information displayed on the display of the user terminal in the second invention is presented and who is to receive the payment can read the money specifying information with a reader, for example, with a barcode reader in a case where the specifying information is a barcode, and can input the money information to the settlement terminal which is a device transmitting the money information to the settlement device via the Internet from the barcode reader as described in Background Art.

As described above, all the money specifying information is not displayed on the display at the user terminal in the second invention of the present invention at the same time. Inversely, all the money specifying information is displayed on the display by spending a certain period.

The user terminal may include input means which allows the user to perform input, and the display control means may be configured to change the image displayed on the display on condition that there is input from the input means, so that all the money specifying information is displayed on the display as the predetermined time passes. In this way, it is possible to reflect the user's intention in determination of a timing for displaying all the money specifying information on the display.

The display control means may be configured to automatically change the image displayed on the display as time passes, so that all the money specifying information may be displayed on the display as the predetermined time passes. In this manner, it is also possible not to reflect the user's intention in determination of a timing for displaying all the money specifying information on the display.

The circumstances described above are the same as those in a case of the first invention.

As described above, there is a case where the user terminal in the second invention includes the input means. The money specifying information image in that case can be, for example, displayed as follows.

For example, the display control means may be configured to make the money specifying information image larger than the display range of the display and may allow all the money specifying information to be browsed on the display only in a case where the user scrolls the money specifying information image by performing input from the input means. For example, this case corresponds to a case where the money specifying information image is an image in which the money specifying information which is a one-dimensional barcode in which a number of lateral-direction bars with various widths are arranged in a longitudinal direction is drawn in a range vertically exceeding the display, and all the money specifying information is displayed by the user longitudinally scrolling the money specifying information image displayed on the display. In the case where all the money specifying information is allowed to be browsed on the display only in the case where the money specifying information image is scrolled, the money specifying information is a plurality of pieces of sub-money specifying information, and the respective pieces of the money specifying information divided into a plurality of pieces may be disposed at different locations in the money specifying information image. For example, in a case where a vertical length of the money specifying information image is made, for example, equal to or greater than double of a vertical length of the display, and the two pieces of the sub-money specifying information are located near an upper end and near a lower end of the money specifying information image, and if the two pieces of the sub-money specifying information cannot be displayed on the display at the same time, and both of the two pieces of the sub-money specifying information can be browsed by the money specifying information image being scrolled in a vertical direction, the user can browse all the sub-money specifying information on the display as a result. Note that a plurality of pieces of the sub-money specifying information are information from which the money information can be specified by combining all the pieces in a similar manner to the money specifying information, and if it is satisfied, any information can be used. For example, a plurality of pieces of the sub-money specifying information can specify the respective pieces of the money specifying information which is divided into a plurality of pieces of the money specifying information. In a more specific example, in a case where the money information is a character string of 10 digits (10 characters) and there are two pieces of sub-money specifying information, one piece of the sub-money specifying information specifies the first 5 digits of the money information, and the other piece specifies the last 5 digits of the money information. Further, in another example of the sub-money specifying information, in a case where there are, for example, two pieces of the sub-money specifying information, one piece specifies a character string which includes the money information in part and which is longer than the money information, and the other piece is information specifying which part of the above-described long character string specified with one piece of the above-described sub-money specifying information is money information. Note that, in other cases, the sub-money specifying information may be information as described above in a similar manner.

Further, the display control means may be configured to display the money specifying information image on the display in a state where a plurality of sub-money specifying information images are overlapped with each other, a plurality of the sub-money specifying information images respectively including sub-money specifying information which is information specifying the money specifying information by being combined, and the sub-money specifying information in the sub-money specifying information image disposed in a lower layer is invisible through the sub-money specifying information image disposed in an upper layer of the sub-money specifying information image, and be configured to allow all the sub-money specifying information to be browsed on the display by causing all the sub-money specifying information images to be displayed on the display by the user respectively scrolling the sub-money specifying information images. In this case, like a layer structure in image processing, a plurality of sub-money specifying information images in which the respective pieces of sub-money specifying information are indicated are overlapped with each other in a hierarchical manner. The user can browse all the money specifying information on the display by browsing the respective sub-money specifying information images on the display.

Further, the display control means may be configured to allow all the sub-money specifying information to be browsed on the display by generating the money specifying information image as an image including in part one of a plurality of pieces of the sub-money specifying information which is information specifying the money specifying information by being combined and causing all the sub-money specifying information to be displayed on the display by changing the sub-money specifying information every time there is input from the input means. In an example in this case, a button which encourages the user to perform clicking is provided on the money specifying information image, and the sub-money specifying information is sequentially displayed every time the user clicks the button. The whole money specifying information image may be updated every time the button is clicked, and the sub-money specifying information embedded in the money specifying image may be sequentially displayed. Of course, the button is an example.

Note that all the above-described examples assume existence of the input means, and the money specifying information image, or the like, is changed by input from the input means. However, as described above, user input from the input means is not necessarily essential to change the money specifying information image, or the like, and it is also possible to automatically change the money specifying information image, or the like, as mentioned above, without the user's intention being reflected. Such circumstances are similar both in the second invention and in the first invention.

The display control means may be configured to display the face of a person who is to make payment using the money information in the money specifying information image.

According to such a user terminal, even in a case where the user terminal itself is handed over to a malicious third party, because a person who is to receive payment can authenticate an owner of the user terminal using a face image (face photo) when the person browses the money specifying information image displayed on the display of the user terminal, the money information is less likely to be abused. This circumstance is also similar to that in the first invention.

The present inventor also proposes a method to be executed at the user terminal as one aspect of the second invention. An effect by such a method is the same as that by the user terminal by the second invention.

An example of such a method is a method to be executed at a computer of a portable user terminal including a display on which an image can be displayed and the computer which controls an image to be displayed on the display. This method includes a step of displaying on the display a money specifying information image which is an image including money specifying information which is comprised of numbers, characters, symbols or enumeration of two or more types among the numbers, the characters and the symbols, and which is information specifying money information which is information having monetary value, to be executed by the computer, and in the step of displaying the money specifying information image on the display, the money specifying information is displayed on the display so that all the money specifying information is not displayed on the display at the same time.

The present inventor also proposes a computer program for causing, for example, a general-purpose portable computer to function as a user terminal by the second invention as one aspect of the second invention of the present invention.

An example of such a computer program is a computer program for causing a portable computer including a display on which an image can be displayed and the computer which controls an image to be displayed on the display to execute a step of displaying on the display a money specifying information image which is an image including money specifying information which is comprised of numbers, characters, symbols or enumeration of two or more types among the numbers, the characters and the symbols, and which is information specifying money information which is information having monetary value, and in the step of displaying the money specifying information image on the display, the computer displays the money specifying information on the display so that all the money specifying information is not displayed on the display at the same time.

**Brief Description of Drawings**

FIG. 1 is a diagram illustrating an overall configuration of a settlement system according to a first embodiment;

FIG. 2 is a diagram illustrating appearance of a user terminal included in the settlement system illustrated in FIG. 1;

FIG. 3 is a diagram illustrating a hardware configuration of the user terminal included in the settlement system illustrated in FIG. 1;

FIG. 4 is a block diagram illustrating functional blocks generated inside the user terminal included in the settlement system illustrated in FIG. 1;

FIG. 5 is a diagram illustrating a hardware configuration of a settlement device included in the settlement system illustrated in FIG. 1;

FIG. 6 is a block diagram illustrating functional blocks generated inside the settlement device included in the settlement system illustrated in FIG. 1;

FIG. 7 is a diagram illustrating an example of data recorded in a credit information recording unit illustrated in FIG. 6;

FIG. 8 is a diagram illustrating an example of data recorded in a location information recording unit illustrated in FIG. 6;

FIG. 9 is a diagram illustrating an example of data recorded in an OTP information recording unit illustrated in FIG. 6;

FIG. 10 is a diagram illustrating a hardware configuration of a settlement terminal included in the settlement system illustrated in FIG. 1;

FIG. 11 is a block diagram illustrating functional blocks generated inside the settlement terminal included in the settlement system illustrated in FIG. 1;

FIG. 12 is a diagram illustrating an example of an image to be displayed on a display of the user terminal included in the settlement system illustrated in FIG. 1;

FIG. 13 is a diagram illustrating another example of the image to be displayed on the display of the user terminal included in the settlement system illustrated in FIG. 1;

FIG. 14 is a diagram illustrating an example of an image to be displayed on a display of the settlement terminal included in the settlement system illustrated in FIG. 1;

FIG. 15 is a diagram illustrating processing flow to be executed when settlement is made in the settlement system illustrated in FIG. 1;

FIG. 16 is a diagram illustrating an example of an image to be displayed on the display of the user terminal when settlement is cancelled in the settlement system illustrated in FIG. 1;

FIG. 17 is a diagram illustrating an example of an image to be displayed on a display of a user terminal included in a settlement system of a second embodiment;

FIG. 18 is a block diagram illustrating functional blocks generated inside the user terminal included in the settlement system of the second embodiment;

FIG. 19 is a diagram illustrating an example of an image to be displayed on the display of the user terminal included in the settlement system of the second embodiment;

FIG. 20 is a functional block diagram illustrating functional blocks generated within a display control unit of the user terminal of the first embodiment;

FIG. 21 is a diagram for explaining an image to be displayed on the display of the user terminal in Example 1;

FIG. 22 is a diagram for explaining an image to be displayed on the display of the user terminal in Example 2;

FIG. 23 is a diagram for explaining an image to be displayed on the display of the user terminal in Example 3;

FIG. 24 is a diagram for explaining an image to be displayed on the display of the user terminal in Example 4;

FIG. 25 is a diagram for explaining an image to be displayed on the display of the user terminal in Example 5;

FIG. 26 is a diagram for explaining an image to be displayed on the display of the user terminal in Example 6;

FIG. 27 is a diagram for explaining an image to be displayed on the display of the user terminal in Example 7;

FIG. 28 is a diagram for explaining an image to be displayed on the display of the user terminal in Example 8;

FIG. 29 is a diagram for explaining an image to be displayed on the display of the user terminal in Example 9;
FIG. 30 is a diagram for explaining an image to be displayed on the display of the user terminal in Example 10;
FIG. 31 is a diagram for explaining an image to be displayed on the display of the user terminal in Example 11;
FIG. 32 is a diagram for explaining an image to be displayed on the display of the user terminal in Example 12;
FIG. 33 is a diagram for explaining an image to be displayed on the display of the user terminal in Example 13; and
FIG. 34 is a diagram for explaining an image to be displayed on the display of the user terminal in Example 14.

**Description of Embodiments**

A first embodiment and a second embodiment of the present invention will be described below. The same reference numerals will be assigned to the same targets in the respective embodiments and Modified Examples, and overlapped description may be omitted.

All of the following first and second embodiments and Modified Examples thereof relate to a settlement system. Of course, all the following settlement systems are examples, and a user terminal which will be described below can be naturally used in other settlement systems. Particularly, a method for generating a one-time password which becomes an example of money information in the present invention naturally does not have to be a method which will be described below.

«First embodiment»

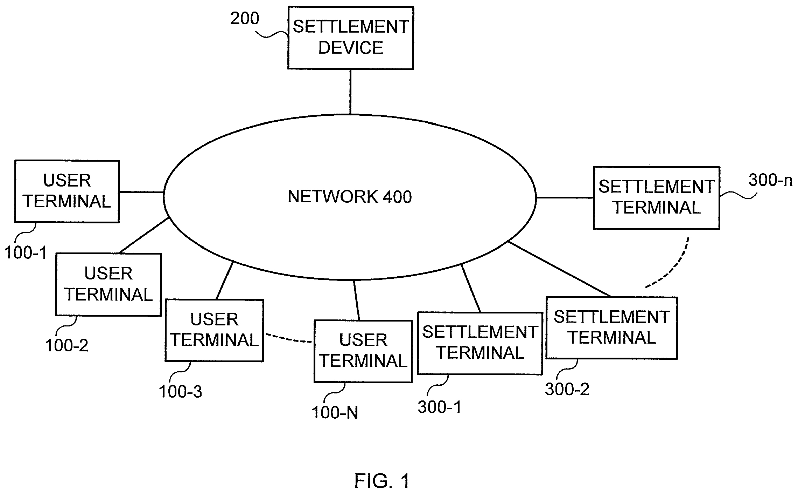

FIG. 1 schematically illustrates an overall configuration of a settlement system of a first embodiment.

The settlement system is configured to include a plurality of user terminals 100-1 to 100-N (hereinafter, also simply referred to as a "user terminal 100"), a settlement device 200 and settlement terminals 300-1 to 300-N (hereinafter, also simply referred to as a "settlement terminal 300"). All of these can be connected to a network 400.

The network 400 is the Internet in this embodiment, while the network is not limited to the Internet.

The user terminal 100 corresponds to the user terminal described in Background Art of the present invention, and includes a computer. In more details, the user terminal 100 in this embodiment is configured with a general-purpose computer. In this embodiment, while description will be provided assuming that each user has one user terminal 100, one user may possess a plurality of user terminals 100. If this case is compared to a settlement system using a credit card or a debit card, this case is like a case where one user possesses a plurality of credit cards or debit cards. Of course, by, for example, a plurality of different computer programs (this will be described later) distributed by managers of different settlement devices 200 being installed in one user terminal 100, or the like, it is possible to allow the user to make settlement at a plurality of settlement devices 200 with one user terminal 100 only by possessing one user terminal 100. This is a state similar to a state where, in a conventional settlement system using a credit card, the user possesses a plurality of credit cards. However, according to the settlement system in this embodiment, the user does not have to possess a plurality of credit cards which are physically bulky.

A configuration of the user terminal 100 will be described next. Configurations of the respective user terminals 100-1 to 100-N are basically the same.

The user terminal 100 is a mobile phone, a smartphone, a tablet, a notebook computer, or the like. Among them, particularly, a smartphone or a tablet is preferably used as the user terminal 100, because it is portable and is suited as a device in which a program which will be described later is installed. The smartphone is, for example, iPhone (trademark) which is manufactured and sold by Apple Japan LLC. The tablet is, for example, iPad (trademark) which is manufactured and sold by Apple Japan LLC. In the following description, description will be provided assuming that the user terminal is a smartphone, while the user terminal is not limited to a smartphone.

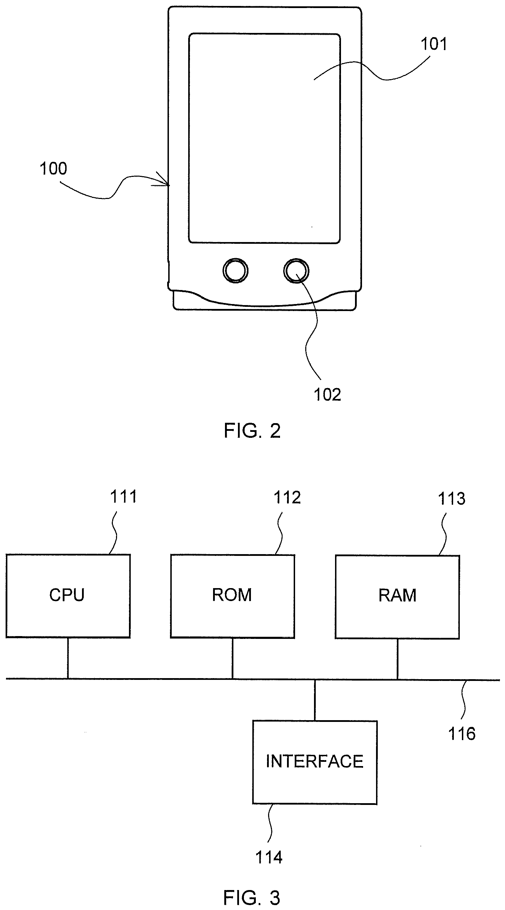

An example of appearance of the user terminal 100 is illustrated in FIG. 2.

The user terminal 100 includes a display 101. The display 101 is provided for displaying a still image or a moving image, and a publicly-known or well-known display can be used. The display 101 is, for example, a liquid crystal display. The user terminal 100 further includes an input device 102. The input device 102 is provided for allowing the user to perform desired input to the user terminal 100. As the input device 102, a publicly-known or well-known device can be used. While the input device 102 of the user terminal 100 in this embodiment is a button type device, the input device 102 is not limited to this, and a numeric keypad, a keyboard, a trackball, a mouse, or the like, can be used. Further, in the case where the display 101 is a touch panel, the display 101 also functions as the input device 102, and, in this embodiment, the display 101 also functions as the input device 102.

A hardware configuration of the user terminal 100 is illustrated in FIG. 3.

The hardware includes a central processing unit (CPU) 111, a read only memory (ROM) 112, a random access memory (RAM) 113, and an interface 114, and these are connected to each other with a bus 116.

The CPU 111 is an arithmetic device which performs operation. The CPU 111, for example, executes processing which will be described later by executing a computer program recorded in the ROM 112. Note that the computer program described here includes at least a computer program for causing the user terminal 100 to function as the user terminal of the present invention. This computer program may be pre-installed in the user terminal 100 or may be installed after shipping. This computer program may be installed in the user terminal 100 via a predetermined recording medium such as a memory card or may be installed via a network such as a LAN and the Internet.

The ROM 112 records a computer program and data required for the CPU 111 to execute processing which will be described later. The computer program recorded in the ROM 112 is not limited to this, and if the user terminal 100 is a smartphone, a computer program and data for executing call and e-mail, which is required for causing the user terminal to function as a smartphone, is recorded. The user terminal 100 can further browse a website on the basis of the data received via the network 400, and a publicly-known web browser for enabling browsing is implemented.

The RAM 113 provides a work area necessary for the CPU 111 to perform processing.

The interface 114 exchanges data between the CPU 111, the RAM 113, or the like, connected with the bus 116 and outside. The above-described display 101 and the input device 102 are connected to the interface 114. Operation content input from the input device 102 is input from the interface 114 to the bus 116, and image data which will be described later is output from the interface 114 to the display 101. The interface 114 is further connected to a GPS mechanism and a transmitting/receiving unit, both of which are not illustrated.

The GPS mechanism detects a location where the user terminal 100 is located on the globe. The GPS mechanism generates location information which specifies the detected location of the user terminal 100. The GPS mechanism is publicly known or well-known and detects the location of the user terminal 100 by receiving a radio wave from, for example, a still satellite. The location information is received by the interface 114.

The transmitting/receiving unit transmits/receives data via the network 400 which is the Internet. While there is a case where such communication is performed in a wired manner, in the case where the user terminal 100 is a smartphone, such communication is performed in a wireless manner. If possible, the transmitting/receiving unit can employ a publicly-known or well-known configuration. The data received by the transmitting/receiving unit from the network 400 is received by the interface 114, and the data handed over to the transmitting/receiving unit from the interface 114 is transmitted to outside, for example, to the settlement device 200 by the transmitting/receiving unit via the network 400.

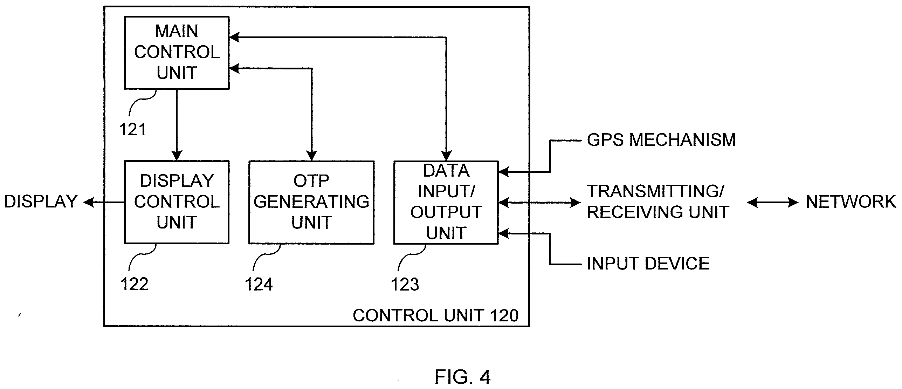

By the CPU 111 executing the computer program, functional blocks as illustrated in FIG. 4 are generated inside the user terminal 100. Note that while the functional blocks described below may be generated by a function of the above-described computer program alone for causing the user terminal 100 to function as a user terminal which executes the following processing, the functional blocks described below may be generated in cooperation with the above-described computer program and an OS and other computer programs installed in the user terminal 100.

A control unit 120 as described below is generated within the user terminal 100, and a main control unit 121, a display control unit 122, a data input/output unit 123, and an OTP generating unit 124 are generated within the control unit 120.

The control unit 120 executes information processing as will be described below.

The main control unit 121 performs overall control within the control unit 120. For example, the main control unit 121 controls the display control unit 122 on the basis of the data received from the data input/output unit 123 which will be described in detail later.

In a case where the main control unit 121 receives tentative allowance information which will be described later, from the data input/output unit 123 which will be also described later, the main control unit 121 notifies the OTP generating unit 124 of this reception. The main control unit 121 further receives a user ID, a password and amount information which will be described later from the data input/output unit 123. There is a case where the main control unit 121 receives user terminal cancellation information which will be described later, from the data input/output unit 123. Further, the main control unit 121 incorporates recording means which is formed with a memory, or the like, which is not illustrated, and records terminal information in the recording means. Examples of the terminal information can include, in the case where the user terminal 100 is a smartphone, ID number recorded in a subscriber identity module card (SIM card) built in the smartphone, and individual identification number such as serial number of the smartphone. The main control unit 121 acquires at least one piece of the terminal information from the user terminal 100 in advance. Note that the main control unit 121 may acquire the terminal information from the user terminal 100 every time the user performs payment processing. In either case, the main control unit 121 transmits the user ID, the password, the amount information and the terminal information to the data input/output unit 123 at a timing which will be described later.

The main control unit 121 also receives a one-time password from the OTP generating unit 124. The main control unit 121 transmits the received one-time password to the display control unit 122. There is a case where the main control unit 121 also receives change information which will be described later from the data input/output unit 123. The main control unit 121 transmits the information to the display control unit 122.

The display control unit 122 controls an image to be displayed on the display 101 while being controlled by the main control unit 121. An image based on the data transmitted from the display control unit 122 is displayed on the display 101. The main control unit 121 transmits an instruction as to what kind of image should be displayed on the display 101 to the display control unit 122.

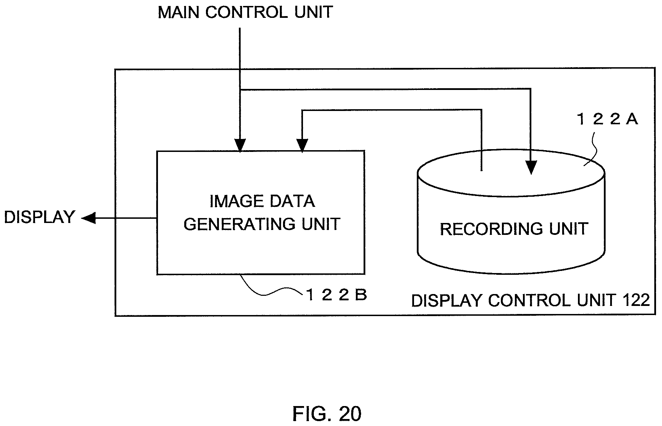

Within the display control unit 122, a recording unit 122A and an image data generating unit 122B exist (FIG. 20). In the recording unit 122A, data of the one-time password transmitted from the main control unit 121 is recorded. Further, while not limited to this, in this embodiment, data of a face photo of a person who is to make payment using the one-time password generated as will be described later (typically, an owner of the user terminal 100) is recorded in the recording unit 122A. Such data of the face photo may be photographed with a camera provided at the user terminal 100 or may be recorded in the user terminal 100 in a wired manner, in a wireless manner or by a portable recording medium which is detachable to the user terminal 100. In either case, the data of the face photo may be recorded in the recording unit 122A using a publicly-known or well-known technique.

The image data generating unit 122B generates image data for an image to be displayed on the display 101. In a case where the image data is generated, the image data generating unit 122B generates image data under control by the main control unit 121, utilizes the data of the one-time password and the data of the face photo recorded in the recording unit 122A to generate the image data, and changes the image on the basis of the change information transmitted from the main control unit 121. A specific method for generating image data to be executed by the image data generating unit 122B and the generated image data will be described later.

The data input/output unit 123 inputs/outputs data to/from the control unit 120. Specifically, the data input/output unit 123 receives input from the input device 102. For example, an instruction of start of settlement, the user ID, the password, the amount information, an instruction of transmission of the user ID, the password and the amount information, and the user terminal cancellation information are input from the input device 102 to the data input/output unit 123. Further, change information which is information for changing an image to be displayed on the display 102 as will be described later is also included in the information input from the input device 102 to the data input/output unit 123. The information including the change information is transmitted to the main control unit 121.

Further, the data input/output unit 123 receives tentative allowance information which will be described later, transmitted from the settlement device 200 via the network 400, from the transmitting/receiving unit. The data input/output unit 123 transmits the received tentative allowance information to the main control unit 121.

Further, the data input/output unit 123 receives the location information from the GPS mechanism. The data input/output unit 123 transmits the received location information to the main control unit 121.

Further, the data input/output unit 123 receives the user ID, the password, the terminal information and the amount information from the main control unit 121. The user ID is information unique to each user for specifying the user, and is enumeration of alphanumeric characters of a predetermined number of characters as will be described later in this embodiment, while the user ID is not limited to this. The password is information for more reliably authenticating the user, and is enumeration of alphanumeric characters of a predetermined number of characters as will be described later in this embodiment, while the password is not limited to this. The terminal information is information for specifying the user terminal 100, and is also directed to making user authentication more reliably. While not limited to this, the terminal information in this embodiment is set as enumeration of numbers of a predetermined number of characters as will be described later. The amount information is information for specifying an amount which is to be paid by the user to a manager of the settlement terminal 300, and is numbers expressing an amount in a predetermined unit (such as yen, dollar and Euro). Further, the location information and the one-time password are transmitted to the data input/output unit 123 from the main control unit 121. Note that the location information may be held at the data input/output unit 123 in a state where the location information is input to the data input/output unit 123 from the GPS mechanism instead of being returned to the data input/output unit 123 from the data input/output unit 123 by way of the main control unit 121. Further, the one-time password may be directly transmitted to the data input/output unit 123 from the OTP generating unit 124 without going through the main control unit 121. The user terminal cancellation information is information expressing user's intention for cancelling one item of past settlement which has already been finished as will be described later, and is input by the user using the input device 102. At least information specifying one item of the past settlement which the user desires to cancel is included in the user terminal cancellation information.

The user ID, the password, the terminal information, the amount information, the location information, the one-time password, the user terminal cancellation information, or the like, are respectively transmitted to the transmitting/receiving unit from the data input/output unit 123 at respective appropriate timings which will be described later, and the information except for the one-time password among these is transmitted to the settlement device 200 from the transmitting/receiving unit via the network 400.

As described above, in the case where the main control unit 121 receives the tentative allowance information, the OTP generating unit 124 is notified of the reception by the main control unit 121. In a case where the OTP generating unit 124 receives the notification, the OTP generating unit 124 generates the one-time password. The way of generating the one-time password is possible to follow a conventional way of generating the one-time password. A specific example of the way of generating the one-time password will be described later.

The one-time password is formed with numbers, characters, symbols or enumeration of two or more types of the numbers, the characters and the symbols, and is an example of the money information in the present invention. The number of digits or the number of characters is two or more digits at lowest, and, in some cases, may be approximately four digits.

The settlement device 200 will be described next.

The settlement device 200 is a general computer. A hardware configuration equivalent to that of the settlement device in the conventional settlement system may be employed.

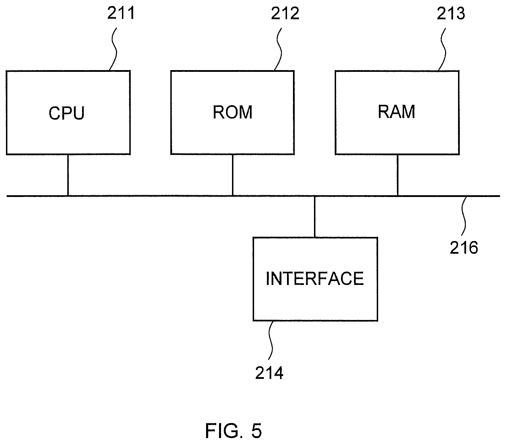

An example of the hardware configuration of the settlement device 200 will be illustrated in FIG. 5.

The hardware includes a CPU 211, ROM 212, RAM 213 and an interface 214, and these are connected to each other with a bus 216.

The CPU 211 is an arithmetic device which performs operation. The CPU 211 executes processing which will be described later, for example, by executing a computer program recorded in the ROM 212. Note that the computer program described here includes at least a computer program for causing the settlement device 200 to function as a settlement device which executes the following processing. This computer program may be pre-installed in the settlement device 200, or may be installed later. This computer program may be installed in the settlement device 200 via a predetermined recording medium such as a memory card or may be installed via a network such as a LAN and the Internet.

In the ROM 212, a computer program and data which are necessary for the CPU 211 to execute processing which will be described later are recorded. The computer program recorded in the ROM 212 is not limited to this, and other necessary computer programs may be recorded.

The RAM 213 provides a work area necessary for the CPU 211 to perform processing.

In addition to the ROM 212 and the RAM 213, it is naturally possible to provide other recording media, for example, a hard disk drive (HDD) and a solid state drive (SSD) and allow these to cover part of the functions of the ROM 212 and the RAM 213.

The interface 214 exchanges data between the CPU 211, the RAM 213, or the like, connected with the bus 216 and outside. The interface 214 is connected to at least the transmitting/receiving unit. Data received by the transmitting/receiving unit from the network 400 is received by the interface 214, and data handed over to the transmitting/receiving unit from the interface 214 is transmitted to outside, for example, to the user terminal 100 via the network 400 by the transmitting/receiving unit.

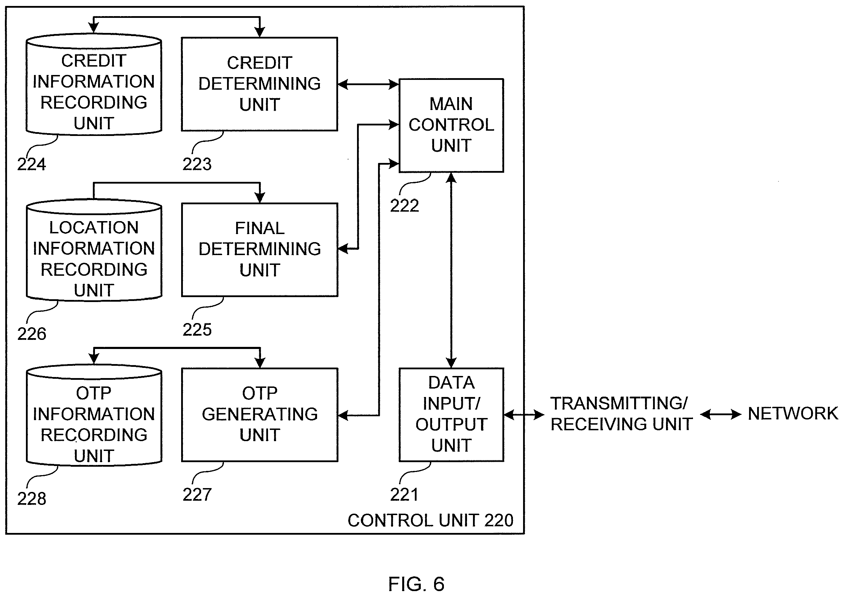

By the CPU 211 executing the computer program, functional blocks as illustrated in FIG. 6 are generated inside the settlement device 200. Note that, while the following functional blocks may be generated by functions of the above-described computer program alone for causing the settlement device 200 to function as a settlement device which executes the following processing, the functional blocks may be generated in cooperation with the above-described computer program and an OS and other computer programs installed in the settlement device 200.

A control unit 220 as will be described below is generated inside the settlement device 200. A data input/output unit 221, a main control unit 222, a credit determining unit 223, a credit information recording unit 224, a final determining unit 225, a location information recording unit 226, an OTP generating unit 227 and an OTP information recording unit 228 are generated within the control unit 220.

The data input/output unit 221 inputs/outputs data to/from the control unit 220. Specifically, the data input/output unit 221 accepts various kinds of data which will be described later from the main control unit 222. The data input/output unit 221 hands over the various kinds of data accepted from the main control unit 222 to the transmitting/receiving unit, and the transmitting/receiving unit transmits these kinds of data to the user terminal 100 or the settlement terminal 300 via the network 400.

The data input/output unit 221 further receives various kinds of data which will be described later received by the transmitting/receiving unit from the user terminal 100 or the settlement terminal 300 via the network 400 and transmits the received these kinds of data to the main control unit 222.

The main control unit 222 performs overall control within the control unit 220.

There is a case where the main control unit 222 receives a user ID, a password, terminal information and account information from the data input/output unit 221. In the case where the main control unit 222 receives these kinds of data, the main control unit 222 transmits these to the credit determining unit 223.

There is a case where the main control unit 222 receives from the data input/output unit 221, the location information transmitted from the user terminal 100. In the case where the main control unit 222 receives this location information, the main control unit 222 transmits the location information to the final determining unit 225.

There is also a case where the main control unit 222 receives tentative allowance information which will be described later from the credit determining unit 223. In the case where the main control unit 222 receives the tentative allowance information, the main control unit 222 transmits the tentative allowance information to the data input/output unit 221. There is also a case where the main control unit 222 receives from the data input/output unit 221, settlement application information, a one-time password and a user ID all of which are transmitted from the settlement terminal 300 and all of which will be described later. In the case where the main control unit 222 receives these, the main control unit 222 transmits these to the final determining unit 225 and transmits an instruction to generate a one-time password to the OTP generating unit 227.

There is also a case where the main control unit 222 receives the one-time password from the OTP generating unit 227. In the case where the main control unit 222 receives the one-time password, the main control unit 222 transmits the one-time password to the final determining unit 225. Note that the one-time password does not necessarily have to be transmitted to the final determining unit 225 via the main control unit 222, and, for example, may be directly transmitted from the OTP generating unit 227 to the final determining unit 225.

There is also a case where the main control unit 222 receives final determination data which will be described later from the final determining unit 225. In the case where the main control unit 222 receives the final determination data, the main control unit 222 performs settlement processing. The settlement processing is processing for allowing settlement from one user to a manager of the settlement terminal 300 which has transmitted the tentative allowance information for requesting payment to the user. The main control unit 222 holds data as to what kind of settlement has been made. For example, the main control unit 222 records information as to from whom to whom how much payment is finally allowed in a recording medium which is not illustrated for each user. Further, while the main control unit 222 rewrites a content of the credit information recording unit 224 as part of the settlement processing, this will be described later.

There is a case where the main control unit 222 receives user terminal cancellation information and settlement terminal cancellation information which will be described later, from the data input/output unit 221. In the case where the main control unit 222 receives the user terminal cancellation information and the settlement terminal cancellation information, and in a case where past settlement specified by the user terminal cancellation information and past settlement specified by the settlement terminal cancellation information are the same, the main control unit 222 performs processing for cancelling the past settlement. Of course, such processing of cancelling the settlement is not necessarily essential, and if the processing of cancelling the settlement is not necessary, it is also possible to delete functions required only for such processing from the user terminal 100, the settlement device 200 and the settlement terminal 300. Note that, while, in this embodiment, the main control unit 222 receives both the user terminal cancellation information and the settlement terminal cancellation information which will be described later and cancels the past settlement only in the case where the past settlement specified by the user terminal cancellation information and the past settlement specified by the settlement terminal cancellation information are the same, instead, the main control unit 222 may cancel the past settlement specified by the user terminal cancellation information or the past settlement specified by the settlement terminal cancellation information when the main control unit 222 accepts only one of the user terminal cancellation information and the settlement terminal cancellation information. Further, the main control unit 222 may cancel only settlement which is relatively new among the past settlement. For example, the main control unit 222 may allow cancellation of only settlement within 10 minutes after the above-described settlement processing has been finished.

As described above, the credit determining unit 223 receives the user ID, the password and the terminal information from the main control unit 222. In the case where the credit determining unit 223 receives these, the credit determining unit 223 performs credit determination. The credit determination is determination as to whether or not it is possible to make settlement of payment of the amount specified by the above-described amount information for the user specified by the user ID, the password and the terminal information. Such credit determination includes so-called authentication processing as to whether or not the user is valid.

The credit determining unit 223 utilizes the data recorded in the credit information recording unit 224 for credit determination including the authentication processing.

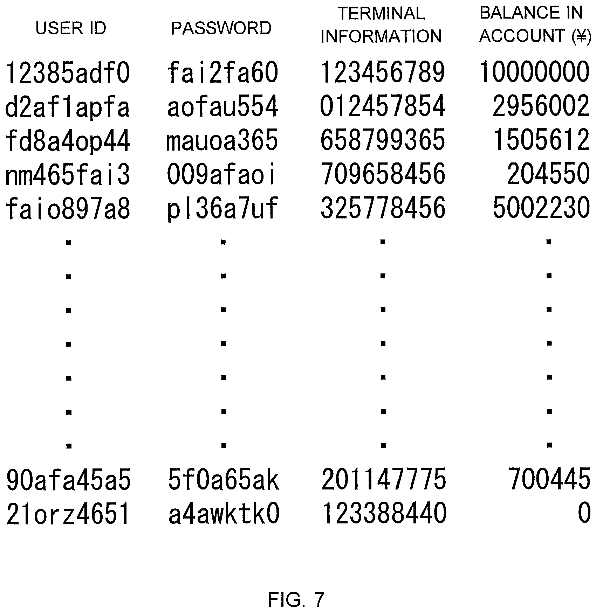

The data as illustrated in FIG. 7 is recorded in the credit information recording unit 224.

While not limited to this, in this embodiment, the user ID, the password, the terminal information and balance in an account are recorded in the credit information recording unit 224. These are associated for each user. Note that, in addition to these, real name, phone number, e-mail address, or the like, of the respective users may be naturally recorded.

The user ID is information for specifying each user. While not limited to this, the user ID in this embodiment is enumeration of alphanumeric characters of a predetermined number of characters. The user ID is determined by each user or determined by the manager of the settlement device 200. In the case where the user ID is determined by the user, the manager of the settlement device 200 is notified of the user ID from the user using a publicly-known or well-known method, and the notified user ID is recorded in the credit information recording unit 224.

The password is information for confirming validity of each user. While not limited to this, the password in this embodiment is enumeration of alphanumeric characters of a predetermined number of characters. The password is determined by each user. The manager of the settlement device 200 is notified of the password from the user using a publicly-known or well-known method, and the notified password is recorded in the credit information recording unit 224.

The terminal information is information for confirming validity of each user further firmly. As mentioned above, specific examples of the terminal information can include ID number recorded in a SIM card, serial number of a smartphone, or the like. The terminal information is uniquely determined for each user terminal 100. The manager of the settlement device 200 is notified of the terminal information from, for example, the user using a publicly-known or well-known method, and the notified terminal information is recorded in the credit information recording unit 224.

The balance in an account is an amount of a deposit of each user and indicates an amount of money deposited in an account of each user. The balance in the account is recorded in the credit information recording unit 224 as deposit balance information which specifies the balance in the account. There is a case where the balance in the account is an amount of money deposited in an account of the user managed by the manager of the settlement device 200 in a case where the user has paid some money in advance to the manager of the settlement device 200. In such a case, this settlement system becomes a so-called prepaid type settlement system. Alternatively, there is a case where the balance in the account is an amount of money deposited in an account of the user in the bank in a case where the manager of the settlement device 200 is a bank, or the like, which manages deposits as business, or in a case where the manager of the settlement device 200 is affiliated with a bank, or the like. In this embodiment, either case can apply.

When the credit determining unit 223 receives the user ID, the password, the terminal information and the amount information from the main control unit 222, the credit determining unit 223 reads out the password, the terminal information and the balance in the account associated with the user ID which is the same as the received user ID from the credit information recording unit 224. In a case where the user ID which is the same as the user ID received by the credit determining unit 223 does not exist in the credit information recording unit 224, the credit determining unit 223 does not read out information such as the password from the credit information recording unit 224. In this case, the credit determining unit 223 cancels processing of credit determination.

In the case where the user ID which is the same as the user ID received by the credit determining unit 223 from the main control unit 222 is recorded in the credit information recording unit 224, and the password, the terminal information and the balance in the account associated with the user ID which is the same as the received user ID are read out from the credit information recording unit 224, the credit determining unit 223 determines whether or not the password and the terminal information received from the main control unit 222 are the same as the password and the terminal information read out from the credit information recording unit 224. If they match each other, the credit determining unit 223 authenticates the user who has transmitted the user ID, or the like, as a valid user, and, if at least one of the password and the terminal information does not match each other, determines the user who has transmitted the user ID, or the like, as an invalid user, and cancels the processing of credit determination. The processing up to this processing is authentication processing. That is, as a condition, it is necessary that all the user ID, the password and the terminal information transmitted from the user completely match those recorded in the credit information recording unit 224 in order that the user may be acknowledged as valid in the authentication processing in the credit determination in this embodiment. In the case where the user who has transmitted the password is authenticated as a valid user in the authentication processing, the credit determining unit 223 performs credit determination as to whether or not the settlement requested by the user may be allowed.

The credit determination is performed by comparing the amount information transmitted from the user terminal 100 with the balance in the account read out from the credit information recording unit 224 associated with the user ID associated with the amount information. While not limited to this, in this embodiment, in a case where the balance in the account is equal to or greater than the amount specified by the amount information, the settlement requested by the user is allowed. In this case, the credit determining unit 223 generates the tentative allowance information. Meanwhile, in a case where the balance in the account is less than the amount specified by the amount information, the settlement requested by the user is not allowed. In this case, the credit determining unit 223 does not generate the tentative allowance information. In the case where the credit determining unit 223 generates the tentative allowance information, the tentative allowance information is transmitted to the main control unit 222.

Further, the credit determining unit 223 has a function of specifying time (it is also possible to utilize a function of a clock provided at a normal computer), and the main control unit 222 is notified of time information for specifying time at which the credit determination is performed. Such time information is transmitted from the main control unit 222 to the final determining unit 225.

As described above, there is a case where the final determining unit 225 receives from the main control unit 222, the location information transmitted from the user terminal 100. There is also a case where the main control unit 222 receives from the data input/output unit 221, the settlement application information, the user ID and the one-time password, all of which are transmitted from the settlement terminal 300. While not limited to this, in this embodiment, the settlement application information, the user ID and the one-time password are collectively transmitted from the settlement terminal 300 to the settlement device 200, and these three pieces of information are collectively received by the final determining unit 225. The final determining unit 225 has a function of performing final determination processing in the case where the final determining unit 225 receives the settlement application information, the user ID and the one-time password. The final determination is determination as to whether or not payment to the manager of the settlement terminal 300 requested by the user is finally allowed.

The final determining unit 225 utilizes the information recorded in the location information recording unit 226 for performing final determination. Further, the one-time password provided from the OTP generating unit 227 via the main control unit 222 is also utilized in the final determination.

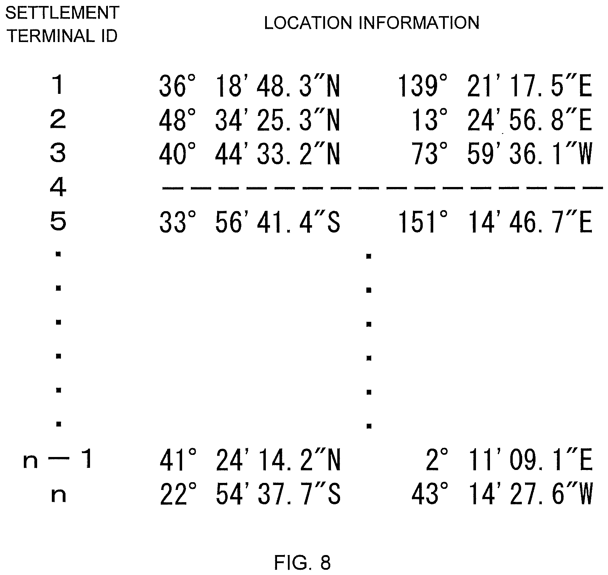

As illustrated in FIG. 8, a settlement terminal ID and location information are recorded in the location information recording unit 226 in association with each other.

The settlement terminal ID is provided for distinguishing and specifying each settlement terminal 300. Because there are n settlement terminals 300 in this embodiment, while, of course, not limited to this, in this embodiment, sequential numbers of 1 to n which are natural numbers are used as the settlement terminal IDs for specifying the respective settlement terminals 300.

The location information is information for specifying a location where the settlement terminal 300 associated with the location information is located. The location information in this embodiment specifies the location of the settlement terminal 300 with latitude and longitude. In FIG. 8, a number to which a character of "N" is assigned and which is located on a left side specifies north latitude, and a number to which the character of "S" is assigned and which is located on the left side specifies south latitude, and a number to which a character of "E" is assigned and which is located on a right side specifies east longitude, and a number to which the character of "W" is assigned and which is located on the right side specifies west longitude. Of course, a form of the location information is not limited to combination of latitude and longitude. Note that location information generated at the GPS mechanism of the user terminal 100 has also a similar form in this embodiment.

Note that, in FIG. 8, location information is not set for the settlement terminal whose settlement terminal ID is 4. For example, in the case where the settlement terminal 300 is used for settlement at a virtual store on the Internet, specification of the location of the settlement terminal 300 does not have much meaning on the grounds which will be described later. There can be a case where location information is not set for such a settlement terminal 300.

The manager of the settlement device 200 can be notified of the location information, for example, by the manager of the settlement terminal 300 notifying the manager of the settlement device 200 using appropriate means such as an e-mail and a letter when the settlement terminal 300 is provided. The manager of the settlement device 200 only has to record the notified location information in the location information recording unit 226 in association with the settlement terminal ID of each settlement terminal 300.

The settlement terminal ID of the settlement terminal 300 which transmits the settlement application information is assigned to the above-described settlement application information. When the final determining unit 225 receives the settlement application information and the one-time password, the final determining unit 225 reads out the location information associated with the settlement terminal ID which matches the settlement terminal ID assigned to the settlement application information from the location information recording unit 226.

The OTP generating unit 227 has a function of generating a one-time password.

As described above, the main control unit 222 transmits an instruction to generate a one-time password to the OTP generating unit 227 when the main control unit 222 receives the settlement application information and the one-time password from the data input/output unit 221. When the OTP generating unit 227 receives this instruction, the OTP generating unit 227 generates the one-time password. Note that, while, in this embodiment, a timing at which a one-time password is generated at the settlement device 200 is after the settlement device 200 receives the settlement application information and the one-time password generated at the user terminal 100, the timing is not limited to this. The settlement device 200 may, for example, cause the OTP generating unit 227 to create a one-time password at an appropriate timing, for example, at the same time or after the tentative allowance information is generated and before the final determining unit 225 performs final determination.

While a way of generating the one-time password only has to follow the prior art, the specific example is, for example, as follows.

To generate the one-time password, it is only necessary to execute a method in which a new value is sequentially created using a certain initial value (there is a case where there are two or more initial values) by assigning a past value to a predetermined function, every time a one-time password is required. By this means, it is possible to continuously generate the one-time password which is the above-described "value". Such a one-time password becomes a pseudo random number which depends on the initial value.

Examples of the function to be used for creating the above-described "value" can include the following (a) to (c). All of the following (a) to (c) are equations for creating $X_N$ which is the N-th "value". Further, P, Q, R and S are natural numbers.

$$(a) \quad (X_N) = (X_{N-1})^P + (X_{N-2})^Q$$

$$(b) \quad (X_N) = (X_{N-1})^P$$

$$(c) \quad (X_N) = (X_{N-1})^P (X_{N-2})^Q (X_{N-3})^R (X_{N-4})^S$$

In (a), a new "value" is generated using two past "values" by adding values obtained by respectively raising the values to the power of P and to the power of Q. Note that, to be exact, if the two past "values" are used, and values obtained by raising the values to the power of P and to the power of Q are added, because the number of digits increases, actually, the new "value" is generated by extracting an appropriate number of digits from the beginning of the obtained value, by extracting an appropriate number of digits from the end, by extracting an appropriate number of digits from an appropriate portion in the value, or the like.

In (b), one past "value" is used, and a value in which the number of digits of a value obtained by raising the past value to the power of P is sorted out as described above is used as the new "value".

In (c), four past "values" are used, and a product of values obtained by respectively raising the values to the power of P, to the power of Q, to the power of R and to the power of S is obtained, and thereafter, a value in which the number of digits is sorted out as described above is used as the new "value".

The above-described (a) to (c) are an example of algorithm for generating the one-time password, and it is also possible to add change to the algorithm, for example, add change such as sequentially using the above-described (a) to (c) when the one-time password is generated.

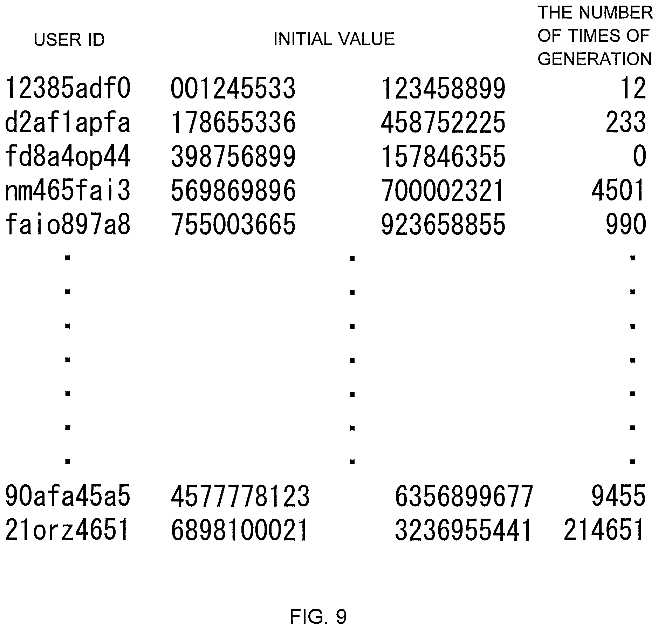

The OTP generating unit 227 utilizes data recorded in the OTP information recording unit 228 to generate the one-time password. In the OTP information recording unit 228, for example, the data as indicated in FIG. 9 is recorded. The data recorded in the OTP information recording unit 228 is a user ID, an initial value, and the number of times of generation. Among these, only the initial value is essential.

The user ID recorded in the OTP information recording unit 228 is the same as the user ID recorded in the credit information recording unit 224, and is information for specifying each user.

The initial value is an value to be used in the case where the one-time password is generated.

The initial value is different for each user terminal 100. To enable the one-time password which is the same as the one-time password generated at the OTP generating unit 124 of each user terminal 100 to be generated at the OTP generating unit 227 of the settlement device 200, the initial value which is the same as the initial value provided at each user terminal 100 is recorded in the OTP information recording unit 228. As described above, the one-time password is a pseudo random number which depends on the initial value. In other words, a one-time password for one user terminal 100 is always the same when the one-time passwords in the same order are compared. Therefore, if the initial value which is the same as the initial value provided at each user terminal 100 is prepared at the settlement device 200, the settlement device 200 can reproduce the one-time password at any user terminal 100. In this embodiment, there are two initial values for each user terminal 100, which are recorded in the OTP information recording unit 228. This is because, while not limited to this, in this embodiment, the one-time password is generated using the above-described equation (a) in which the new "value" is generated by utilizing the past two "values". It is sufficient to record past values required for generating the new "value", that is, the one-time password in the OTP information recording unit 228.

The number of times of generation is a numerical value indicating how many times the one-time password for the user terminal 100 is generated. As described above, the one-time password is a random number, more accurately the one-time password is a pseudo random number. When the number of times of generation is 0, the one-time password generated first using the initial value is used for final determination which will be described later, when the number of times of generation is one, the one-time password generated next using the above-described initial value is used for final determination, and, when the number of times of generation is N, the one-time password generated at N-1-th using the above-described initial value is used for final determination.

When the OTP generating unit 227 receives an instruction to generate the one-time password from the main control unit 222, the OTP generating unit 227 reads out the initial value associated with the user ID received along with the one-time password, and the number of times of generation from the OTP information recording unit 228. The OTP generating unit 227 assigns the initial value to the above-described equation (a) to generate values up to the N-1-th value when the read number of times of generation is N. The values become the one-time password to be used for final determination.

Note that the one-time password is generated using a similar method also at the OTP generating unit 124 of the user terminal 100. As described above, the OTP generating unit 124 of the user terminal 100 holds the same initial value as the initial value recorded in the OTP information recording unit 228 of the settlement device 200, can use the same equation (in a case of this embodiment, equation (a)) as the equation used at the OTP generating unit 227 of the settlement device 200, and can record the number of times of generation for specifying how many times the "value" has been generated in the past in the same way as recorded in the OTP information recording unit 228. By this means, the one-time password generated at the user terminal 100 and the one-time password generated at the settlement device 200 can be always made in synchronization with each other.

In this manner, a method using the one-time passwords generated in the same order at two devices to generate the same one-time password at the two devices which generate the one-time passwords, or to make the one-time passwords in synchronization with each other is typically referred to as event synchronization. The above-described method employs a method of a one-time password using event synchronization. Meanwhile, it is also possible to use information of time to make the one-time passwords in synchronization with each other. Such a method for making the one-time passwords in synchronization with each other is typically referred to as time synchronization. Both the event synchronization and the time synchronization are publicly known techniques, and it is possible to make the one-time passwords in synchronization with each other by using one of the methods.

In either case, the OTP generating unit 227 transmits the generated one-time password to the final determining unit 225 via the main control unit 222. Further, the OTP generating unit 227 rewrites the number of times of generation which is recorded in the OTP information recording unit 228 and which is associated with the user ID of the user terminal 100 for which the one-time password for the user terminal 100 is created, to increment the number by one.

Note that, as described above, among the information to be recorded in the OTP information recording unit 228, only the initial value is essential. In this case, the one-time password generated at the user terminal 100 and the one-time password generated at the settlement device 200 are made in synchronization with each other as follows.

First, a case where there is no information of the number of times of generation will be described. In this case, the OTP generating unit 227 of the settlement device 200 repeats processing of deleting the "value" from oldest and rewriting the value with a new "value" every time the new "value" is generated. By repeating similar processing also at the user terminal 100, it is possible to make the one-time password generated at the user terminal 100 in synchronization with the one-time password generated at the settlement device 200 without using the information of the number of times of generation which indicates how many times the "value" has been generated in the past.

Next, a case where there is no user ID will be described. In the case where the user ID does not exist, the user is specified with the information for specifying the user, which becomes a substitute for the user ID. Because conditions for the settlement device 200 to generate the one-time password are different for each user (for example, in this embodiment, while the initial values allocated to the respective users are different, it is also possible to change an equation, that is, algorithm to be used for each user), to determine which conditions among conditions different for each user are used to generate the one-time password at the settlement device 200, the information for specifying the user is required in principle. For example, by the user giving a signature on a touch panel display provided at the settlement terminal 300 which will be described later instead of inputting the user ID, it is possible to transmit the signature from the settlement terminal 300 to the settlement device 200 as electronic data. Alternatively, by providing a reading device which captures biological information such as fingerprint of the user and characteristics of a vein at the settlement terminal 300, it is possible to transmit the fingerprint, characteristics of the vein, or the like, read with the reading device to the settlement device 200 as electronic data. In these cases, in place of or in addition to the user ID, the signature, the fingerprint, the characteristics of the vein, or the like, are recorded in the OTP information recording unit 228.

As described above, the final determining unit 225 receives the settlement application information and the one-time password from the main control unit 222. Further, before the reception, the final determining unit 225 receives the location information transmitted from the user terminal 100 and the time information generated at the credit determining unit 223 from the main control unit 222.

Meanwhile, the final determining unit 225 receives the location information indicating the location of the settlement terminal 300 which has transmitted the settlement application information to the settlement device 200, from the location information recording unit 226, and receives the one-time password from the OTP generating unit 227.

The final determining unit 225 compares the one-time password from the settlement terminal 300, received via the main control unit 222 with the one-time password from the OTP generating unit 227, also received via the main control unit 222, and compares the location information indicating the location of the user terminal 100, received via the main control unit 222 with the location information received from the location information recording unit 226. As a result, only when all three conditions that the above-described two one-time passwords which are compared match each other, that a distance between the locations specified by the above-described two pieces of location information which are compared is a predetermined distance, for example, within 20 meters, and that time at which the comparison is performed is within a predetermined period, for example, within five minutes, thirty minutes, five hours, several days, or several months from the time specified by the time information accepted from the credit determining unit 223 via the main control unit 222, are satisfied, the final determining unit 225 finally makes determination to allow payment to the manager of the settlement terminal 300 from the user of the user terminal 100. The final determining unit 225 finally makes determination not to allow the above-described payment in a case where one of the three conditions is not satisfied. The both determination will be referred to as final determination.

In the case where the final determining unit 225 makes final determination, the final determining unit 225 transmits final determination data which is data indicating a result of the final determination to the main control unit 222. The main control unit 222 which has received this final determination data performs processing for allowing payment of money of the amount specified by the amount information which is a trigger of generation of the one-time password to the manager of the settlement terminal 300 which has transmitted the one-time password used for the final determination, from the user of the user terminal 100 which has generated the one-time password used for the final determination in the case where payment is allowed in the final determination. A result of this processing is recorded in, for example, a recording medium which is not illustrated, and which is built in the main control unit 222, and, if the result is necessary to implement processing of the payment, related finance institution, or the like, are notified of the result. Further, in the case where payment is not allowed in the final determination, the main control unit 222 does not perform the above-described processing. Meanwhile, the main control unit 222 transmits a content based on the final determination data to the data input/output unit 221 and transmits the content to the settlement terminal 300 which has transmitted the settlement application information which becomes a basis of the final determination via the transmitting/receiving unit and the network 400.

The settlement terminal 300 will be described next.

The settlement terminal 300 is a general computer which is substantially the same as the settlement terminal used in the settlement system using a credit card. A hardware configuration of the settlement terminal 300 may be equivalent to that of a settlement terminal in a conventional settlement system, and, in this embodiment, is equivalent to that of the user terminal 100.

Note that the settlement terminal 300 includes a touch panel display which is not illustrated. As a result, the settlement terminal 300 includes a display and an input device. Of course, in place of this, while the settlement terminal 300 may include a display which is not a touch panel display, and an input device which is selected as necessary from publicly known or well-known input devices such as a numeric keypad, a keyboard, a mouse and a trackball, separately from each other, description will be provided below assuming that the settlement system in this embodiment includes a touch panel keyboard.

While the one-time password is input to the settlement terminal 300 as will be described later, there is a case where the one-time password is presented from the user to the manager, or the like, of the settlement terminal 300 as a one-time password itself, and there is a case where the one-time password is presented via information for specifying the one-time password (for example, one-dimensional barcode or two-dimensional barcode). In the latter case, the settlement terminal 300 includes a device for reading the information for specifying the one-time password (for example, a barcode reader).

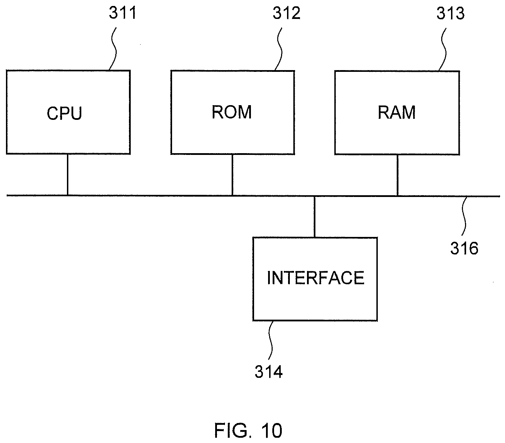

A hardware configuration of the settlement terminal 300 is illustrated in FIG. 10.

The hardware includes a CPU 311, ROM 312, RAM 313 and an interface 314, and these are connected to each other with a bus 316.

The CPU 311 is an arithmetic device which performs operation. The CPU 311 executes processing which will be described later by, for example, executing a computer program recorded in the ROM 312. This computer program may be pre-installed at the settlement terminal 300 or may be installed after shipping. This computer program may be installed to the settlement terminal 300 via a predetermined recording medium such as a memory card or may be installed via a network such as a LAN and the Internet.

In the ROM 312, a computer program and data required for the CPU 311 to execute processing which will be described later are recorded. The computer program recorded in the ROM 312 is not limited to this, and other necessary computer programs may be recorded.

The RAM 313 provides a work area necessary for the CPU 311 to perform processing.

The interface 314 exchanges data between the CPU 311, the RAM 313, or the like, connected with the bus 316 and outside. The interface 314 is connected to at least the transmitting/receiving unit which is not illustrated. Data received by the transmitting/receiving unit from the network 400 is received by the interface 314, and data handed over to the transmitting/receiving unit from the interface 314 is transmitted to outside, for example, the settlement device 200 by the transmitting/receiving unit via the network 400.

The interface 314 is further connected to the input device provided at the touch panel display, and accepts input from the input device. The interface 314 is connected to the touch panel display, and transmits data for displaying an image which will be described later on the touch panel display.

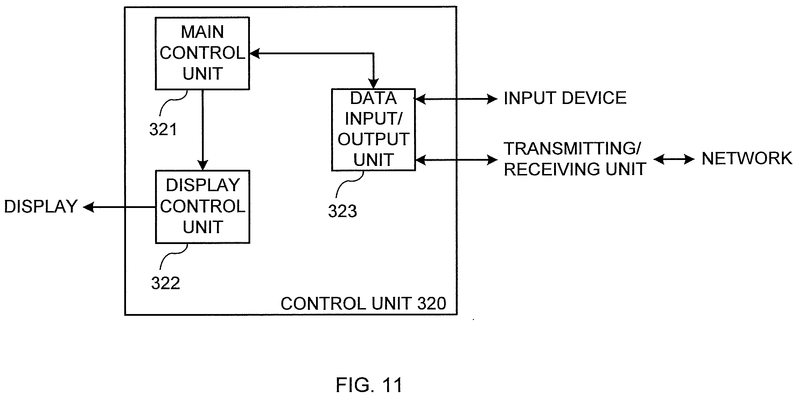

By the CPU 311 executing the computer program, functional blocks as illustrated in FIG. 11 are generated inside the settlement terminal 300. Note that, while the following functional blocks may be generated by a function of the above-described computer program alone for causing the settlement terminal 300 to function as a settlement terminal which executes the following processing, the functional blocks may be generated through cooperation between the above-described computer program and an OS and other computer programs installed at the settlement terminal 300.

A control unit 320 as will be described below is generated within the settlement terminal 300, and a main control unit 321, a display control unit 322 and a data input/output unit 323 are generated within the control unit 320.

The control unit 320 executes information processing as will be described below.

The main control unit 321 performs overall control within the control unit 320. For example, the main control unit 321 controls the display control unit 322 on the basis of the data received from the data input/output unit 323 which will be described in detail later.

The main control unit 321 receives the user ID, the one-time password generated at the user terminal 100, and the settlement application information from the data input/output unit 323 which will be described later. Then, when the main control unit 321 receives all of them, the main control unit 321 transmits them to the data input/output unit 323. There is a case where the main control unit 321 receives settlement terminal cancellation information which will be described later from the data input/output unit 323. When the main control unit 321 receives the settlement terminal cancellation information, the main control unit 321 transmits the settlement terminal cancellation information to the data input/output unit 323 at an appropriate timing. Further, the main control unit 321 holds a settlement terminal ID which is unique to each settlement terminal 300 to distinguish each settlement terminal 300. The settlement terminal ID is included in the settlement application information by the main control unit 321.

The display control unit 322 controls an image to be displayed on the touch panel display while being controlled by the main control unit 321. On the display, an image based on the data transmitted from the display control unit 322 is displayed. The main control unit 321 transmits an instruction as to what kind of image should be displayed on the display, to the display control unit 322.

The data input/output unit 323 inputs/outputs data to/from the control unit 320. Specifically, the data input/output unit 323 receives input from the input device. Examples of the data input from the input device to the data input/output unit 323 are as described above, and include the user ID, the one-time password and the settlement application information. These are transmitted to the main control unit 321. Further, there is a case where the settlement terminal cancellation information is input from the input device.

Further, the data input/output unit 323 outputs data to the transmitting/receiving unit which is not illustrated. The data output to the transmitting/receiving unit is, for example, the user ID, the one-time password, the settlement application information, and the settlement terminal cancellation information, and these are transmitted from the transmitting/receiving unit to the settlement device 200 via the network 400. Note that the user ID and the one-time password are as already described above. The settlement application information is information for requesting final determination of the settlement to the settlement device 200. Further, the settlement terminal cancellation information is information indicating display of intention of the manager of the settlement terminal 300 for cancelling one item of past settlement which has already finished, and is input by the manager of the settlement terminal 300 using the input device. The settlement terminal cancellation information includes at least information specifying one item of the past settlement which the manager desires to cancel.

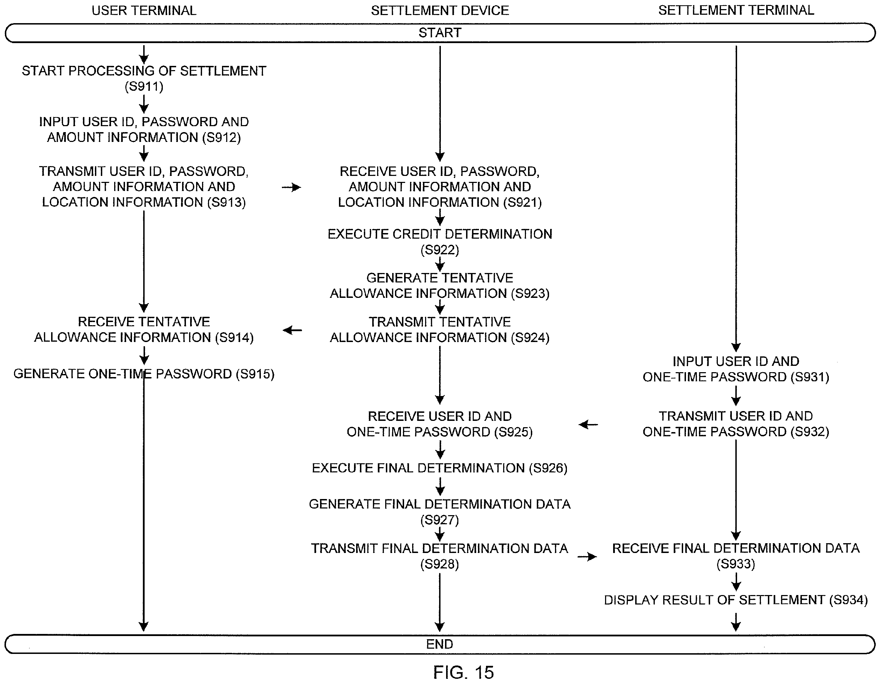

A usage method and operation of the settlement system as described above will be described next with reference to FIG. 15.

When settlement is made using such a system, first, the user himself/herself manipulates the user terminal 100 to start processing of the settlement (S911). To start the processing, the user inputs information indicating start of the processing of the settlement. For example, such information can be input by an icon which is not illustrated, and which is displayed on the display 101 of the user terminal 100 being touched.

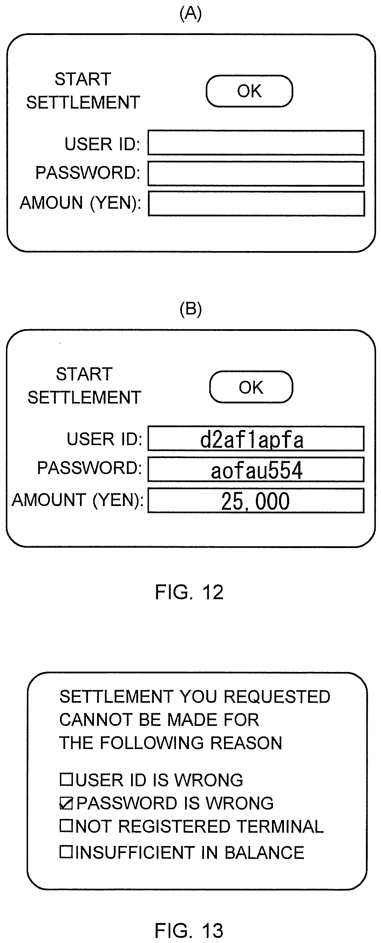

The information is transmitted from the data input/output unit 123 to the main control unit 121. When the main control unit 121 accepts the information, the main control unit 121 transmits to the display control unit 122, an instruction to display an image which encourages the user to input the user ID, or the like, on the display 101. The display control unit 122 which accepts this instruction displays on the display 101, the image which encourages the user to input the user ID, the password, an amount to be paid by the user, for example, as illustrated in FIG. 12(A). The user inputs the user ID on the right side of a portion indicated as the user ID, inputs the password on the right side of a portion indicated as the password, and inputs an amount to be paid by the user on the right side of a portion indicated as the amount (yen) (S912). Data of the user ID and the password input by the user is input from the input device 102 to the data input/output unit 123, and transmitted to the main control unit 121. While the information specifying the amount is the amount information, this amount information is also transmitted to the main control unit 121 in a similar manner. Because the user ID, the password and the amount input by the user are displayed on the display 101 through control by the display control unit 122 which is controlled by the main control unit 121 also during a period while the information is being input, the user can input the user ID, the password and the amount while confirming the display 101. According to the example illustrated in FIG. 12(B), the user tries to pay 25,000 yen using this settlement system.

When the user finishes input of the user ID, the password and the amount information, the user clicks a button on which "OK" is written, displayed on the display 101.

If the user clicks the button on which "OK" is written, the GPS mechanism generates location information of the user terminal which is information specifying a location where the user terminal 100 exists. The location information is transmitted from the data input/output unit 123 to the main control unit 121. The main control unit 121 transmits all the location information and the terminal information recorded in recording means of the main control unit 121, which is not illustrated, in addition to the user ID, the password and the amount information in a lump, to the data input/output unit 123. The data input/output unit 123 transmits these pieces of data in a lump to the transmitting/receiving unit, and the transmitting/receiving unit transmits these pieces of data in a lump to the settlement device 200 via the network 400 (S913). The above-described five pieces of data are transmitted to the settlement device 200 in substantially real time, at least, for example, within several seconds after the user has clicked the button on which "OK" is written.

The settlement device 200 accepts these pieces of data at the transmitting/receiving unit (S921). The transmitting/receiving unit transmits all these pieces of data to the data input/output unit 221, and the data input/output unit 221 transmits all these pieces of data to the main control unit 222. The main control unit 222 transmits the user ID, the password, the terminal information and the amount information to the credit determining unit 223, and transmits the location information of the user terminal 100 to the final determining unit 225.

The credit determining unit 223 executes credit determination (S922). The credit determination is specifically executed as follows.

When the credit determining unit 223 receives the user ID, the password and the terminal information from the main control unit 222, the credit determining unit 223 reads out the password, the terminal information and the balance in the account associated with the user ID which is the same as the received user ID, from the credit information recording unit 224. In the case where the user ID which is the same as the user ID received by the credit determining unit 223 does not exist in the credit information recording unit 224, the credit determining unit 223 does not read out information such as the password from the credit information recording unit 224. In this case, the credit determining unit 223 cancels the processing of credit determination.

In this embodiment, as illustrated in FIG. 12(B), because the user ID input by the user to the user terminal 100 is "d2aflapfa", and the user ID which is the same as this exists on the second field from the top of the credit information recording unit 224, the credit determining unit 223 reads out the password (aofau554), the terminal information (012457854) and the balance in the account (2,956,002 yen) associated with the user ID from the credit information recording unit 224.

In the case where the user ID which is the same as the user ID received by the credit determining unit 223 from the main control unit 222 is recorded in the credit information recording unit 224, and the password, the terminal information and the balance in the account associated with the user ID which is the same as the user ID received from the main control unit 222 are read out from the credit information recording unit 224, the credit determining unit 223 determines whether or not the password and the terminal information received from the main control unit 222 are the same as the password and the terminal information read out from the credit information recording unit 224. If they match each other, the credit determining unit 223 authenticates the user who has transmitted the user ID, or the like, as a valid user. Meanwhile, if at least one of the password and the terminal information does not match each other, the credit determining unit 223 determines the user who has transmitted the user ID, or the like, as an invalid user, and cancels the processing of the credit determination.

Then, credit determination of the authenticated user is executed. The credit determining unit 223 compares the amount information transmitted from the user with the balance in the account read out from the credit information recording unit 224, which is associated with the user ID of the user. In this embodiment, in the case where the balance in the account is equal to or greater than the amount specified by the amount information, the settlement requested by the user is, although temporarily, allowed. Meanwhile, in the case where the balance in the account is less than the amount specified by the amount information, the settlement requested by the user is not allowed. In this example, because the balance in the account (2,956,002 yen) is greater than the amount (25,000 yen) specified by the amount information, the settlement requested by the user is allowed. If such settlement is allowed, the credit determining unit 223 generates the tentative allowance information (S923). In the case where the credit determining unit 223 generates the tentative allowance information, the tentative allowance information is transmitted to the main control unit 222.

Note that, in the case where the credit determining unit 223 generates the tentative allowance information, the credit determining unit 223 notifies the main control unit 222 of time information for specifying time at which the credit determination is performed. Such time information is transmitted from the main control unit 222 to the final determining unit 225 along with the user ID to specify the user for whom the settlement has been temporarily allowed with the tentative allowance information.

The main control unit 222 transmits the tentative allowance information to the data input/output unit 221. The data input/output unit 221 transmits the tentative allowance information to the user terminal 100 via the transmitting/receiving unit and the network 400 (S924).

The transmitting/receiving unit of the user terminal 100 receives the tentative allowance information transmitted from the settlement device 200 (S914). The received tentative allowance information is transmitted from the data input/output unit 123 to the main control unit 121. The main control unit 121 which has received the tentative allowance information notifies the OTP generating unit 124 of reception of the tentative allowance information.

The OTP generating unit 124 which has received this notification generates the one-time password (S915). The OTP generating unit 124 has an initial value for generating the one-time password, and records the number of times of generation indicating how many times the one-time password has been generated in the past. Further, the OTP generating unit 124 can use an equation (that is, algorithm) for generating a one-time password. The OTP generating unit 124 sequentially generates values by repeating processing of assigning a value obtained by assigning an initial value to the above-described equation to the equation again to obtain the next value. The OTP generating unit 124 sets the value created in the order which is greater by one than the number indicated by the number of times of generation as the one-time password to be used at that time.

The generated one-time password is transmitted to the main control unit 121. The main control unit 121 transmits data of the one-time password and an instruction to display the one-time password on the display 101, to the display control unit 122. The display control unit 122 generates image data for displaying an image which will be described later on the display 101. Of course, the image by the image data does not have to be displayed on the display 101 immediately after the data of the one-time password is generated at the OTP generating unit 124, and the image can be displayed on the display 101 at a timing desired by the user after the data of the one-time password is generated. Such a timing can be determined so as to be a user desired timing through input from the input device 102.

While the one-time password is utilized like credit card number in the conventional settlement system using a credit card, and is presented to the manager, or the like, of the settlement terminal 300 from the user, the one-time password is significantly different from the credit card number in that it is possible to provide limit in a period during which the one-time password is effective (can be used for settlement) as will be described later (note that such limit in a period does not have to be provided).

Note that, as described above, there is also a case where the credit determining unit 223 of the settlement device 200 does not generate the tentative allowance information such as in the case where the credit determination is cancelled and in the case where the balance in the account for the user is insufficient. In this case, the tentative allowance information is naturally not transmitted to the user terminal 100. Of course, also in this case, it is also possible to transmit some kinds of data to the user terminal 100 from the settlement device 200 and display on the display 101 of the user terminal 100 that the tentative allowance information is not generated at the settlement device 200 (from a viewpoint of the user, procedure of settlement cannot be continued), and, if necessary, the reason thereof.

In this case, for example, the image as illustrated in FIG. 13 is displayed on the display 101 of the user terminal 100. The display control unit 122 also displays this image on the display 101 in accordance with an instruction from the main control unit 121. In a case of this drawing, as is clear from checking of a square check box on the left side, a fact that the procedure of the settlement cannot be continued because the password is incorrect is presented to the user.

Back to the description regarding the image to be displayed on the display 101 of the user terminal 100 and a method for generating the image, and the image to be displayed on the display 101 of the user terminal 100 and the method for generating the image will be described below. Particularly, because there can be a plurality of types of images, the image to be displayed on the display 101 and the method for generating the image will be described using examples of them.

As described above, the one-time password generated at the OTP generating unit 124 is transmitted to the main control unit 121, and the main control unit 121 which has received the one-time password transmits data of the one-time password and an instruction to display the one-time password on the display 101 to the display control unit 122. The data of the one-time password is recorded in the recording unit 122A, and the instruction to display the one-time password on the display 101 is transmitted to the image data generating unit 122B.

The image data generating unit 122B generates image data for displaying the image on the display 101 as will be described below in accordance with the instruction from the main control unit 121. In all cases of examples which will be described below, in the case where the image data is generated, the image data generating unit 122B reads out at least the data of the one-time password from the recording unit 122A. In the case where the image data generating unit 122B generates image data for the image including a face photo of a person who tries to make payment using the one-time password (typically, an owner of the user terminal 100) among the images to be displayed on the display 101 which will be described below, the image data generating unit 122B also reads out data of the face photo from the recording unit 122A.

The following Example 1 to Example 8 are examples of an image in the case where the one-time password is directly displayed on the display 101. Further, Example 9 to Example 14 are examples of an image in the case where the one-time password is indirectly displayed on the display 101 by information for specifying the one-time password being displayed on the display 101.

(Example 1)

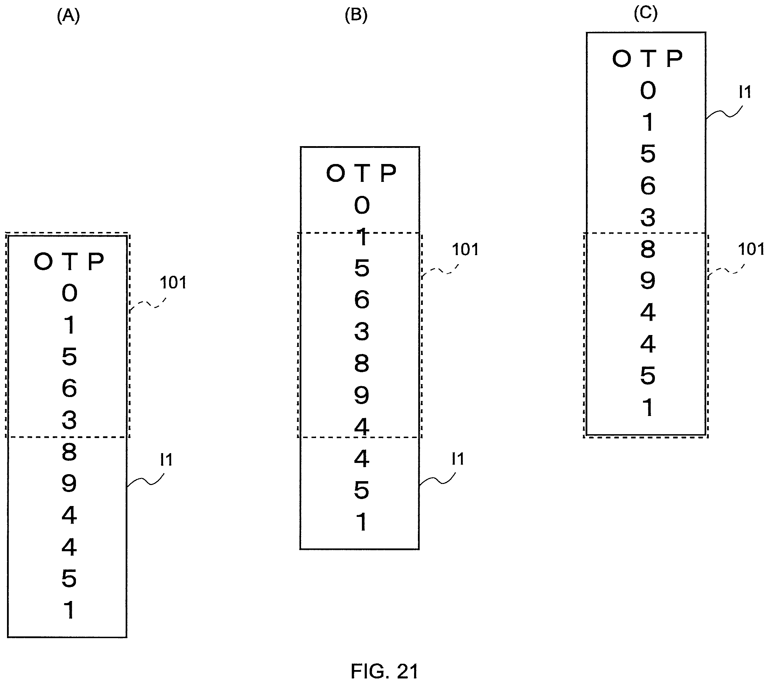

An image in this example is as illustrated in FIG. 21. Reference numeral 101 in FIG. 21 denotes the display 101. Further, Reference character I1 denotes an image. Among the image I1, only a portion overlapping with the display 101 is displayed on the display 101. Note that, also in the following examples, Reference numeral 101 denotes the display 101, and reference characters in which numbers are added to I denotes images. Among each image, only a portion overlapping with the display 101 is displayed on the display 101 in a similar manner to Example 1.

The image I1 in Example 1 has the same width as that of the display 101 as illustrated in FIG. 21, and is longer in a vertical direction than the display 101. The one-time password is displayed as is in the image I1. In this embodiment, it is assumed as an example that the one-time password of "01563894451" is generated. In the image I1, the one-time password is vertically displayed fully in the vertical direction.

In the case where the image I1 is displayed on the display 101, the whole of the one-time password can be browsed by, for example, the image I1 being vertically scrolled in a downward direction from a state in FIG. 21(A) to a state in FIG. 21(B), and then, to a state illustrated in FIG. 21(C). Meanwhile, even if the user performs such scrolling, there is no moment at which all the one-time password is displayed on the display 101 at the same time.

The image data generating unit 122B generates image data for displaying such an image I1 on the display 101. Note that scrolling of the image is executed by the image data generating unit 122B in accordance with input from the input device 102 and in accordance with a publicly-known or well-known technique, which is similar in the following examples.

Note that the image I1 may automatically change from the state illustrated in FIG. 21(A) to the state illustrated in FIG. 21(C) over a predetermined period, for example, for several seconds. In this case, the image data generating unit 122B generates data of such a moving image.

It is also possible to include a face photo which will be described later at a predetermined location, for example, at a lower portion of the image I1.

(Example 2)

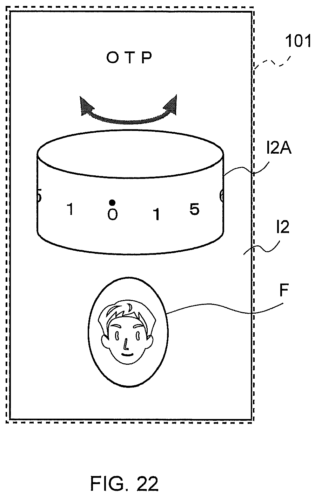

An image 12 in this example is as illustrated in FIG. 22.

The image 12 in this example has the same size as that of the display 101. Therefore, the image 12 is not scrolled with respect to the display 101.

Further, a cylindrical-shaped cylindrical member I2A is displayed in the image 12. The one-time password is attached on an outer surface of the cylindrical member I2A so as to surround the circumference. A dot on 0 in the drawing indicates a starting point of the one-time password.

The cylindrical member I2A in this example can rotate around the axis in the image 12, and the user can freely rotate the cylindrical member I2A in the image 12 by manipulating the input device 102. By causing the cylindrical member I2A to make one turn, the whole of the one-time password displayed on a side surface of the cylindrical member I2A can be displayed on the display 101. Meanwhile, if the user does not rotate the cylindrical member I2A, because the one-time password displayed on the display 101 is only substantially half of the digits, the whole of the one-time password is not displayed on the display 101 at one time. Of course, it is obvious that a target on which the one-time password is written is not necessarily required to be the cylindrical-shaped cylindrical member I2A.

Further, a face photo F of the user who is the owner of the user terminal 100 is displayed in the image 12. In this example, the face photo F is continued to be displayed in the image 12 while the image 12 is displayed. A person who is to receive payment can authenticate whether a user who tries to make payment is an authentic user by seeing the face photo, through so-called face authentication. Such a function of the face photo F is similarly fulfilled in the following examples. Further, in the example where the face photo F exists including this example, it is possible to omit display of the face photo F on the display 101.

The image data generating unit 122B generates image data for displaying such an image 12 on the display 101. Note that the cylindrical member I2A within the image 12 may automatically make one turn for example, for several seconds. In this case, the image data generating unit 122B generates data of such a moving image.

(Example 3)

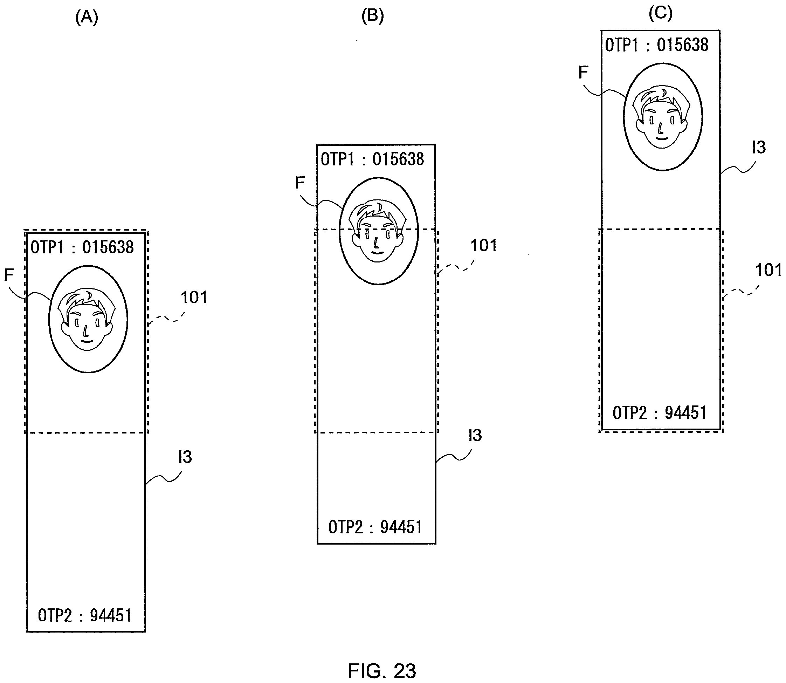

An image in this example is as illustrated in FIG. 23.

An image 13 in Example 3 has the same width as that of the display 101 as illustrated in FIG. 23, and is longer in a vertical direction than the display 101. In the image 13, the one-time password is separately displayed. Numbers in "OTP 1: 015638" are the first half six digits of the one-time password, and numbers in "OTP 2: 94451" are the last half five digits of the one-time password. The OTP 1 and the OTP 2 correspond to the sub-money information in the present invention. The OTP 1 and the OTP 2 are respectively displayed at the top and at the bottom of the image. Further, the face photo F is displayed immediately below the OTP 1 as indicated in Example 2.

In the case where the image 13 is displayed on the display 101, by the image 13 being vertically scrolled in a downward direction, for example, from a state in FIG. 23(A) to a state in FIG. 23(B), and, then, to a state illustrated in FIG. 23(C), it is possible to browse both the OTP 1 and the OTP 2, so that, as a result, it is possible to browse the whole of the one-time password. Meanwhile, even if the user performs such scrolling, there is no moment at which all the one-time password is displayed on the display 101 at the same time.

The image data generating unit 122B generates image data for displaying such an image 13 on the display 101. Note that scrolling of the image is executed in accordance with input from the input device 102.

Note that the image 13 may automatically change from the state illustrated in FIG. 23(A) to the state illustrated in FIG. 23(C) over a predetermined period, for example, for several seconds.

While the one-time password is separated into two parts of the OTP 1 and the OTP 2 in this example, it is also possible to further separate the one-time password into three or more parts, and dispose them in the image 13 so that, for example, when one of them is displayed, the other two parts are not displayed on the display 101.

(Example 4)

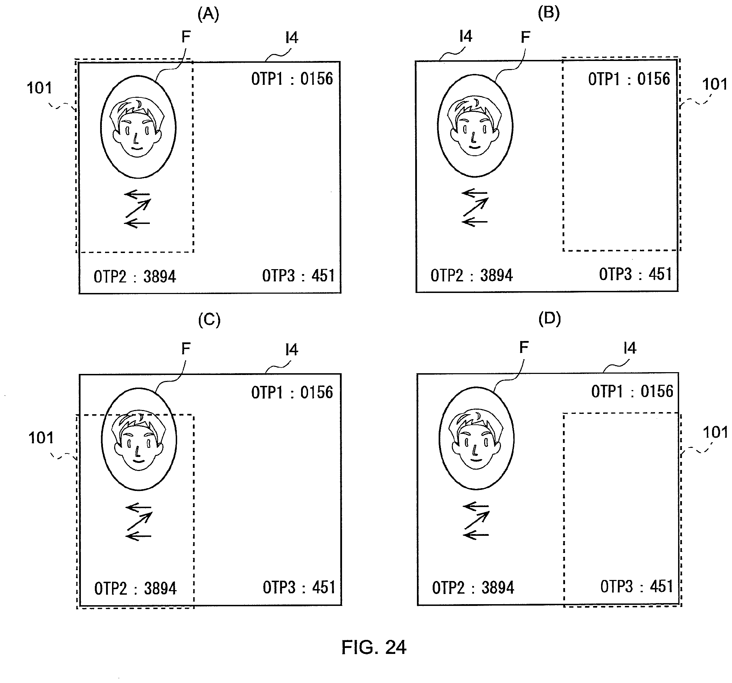

An image in this example is as illustrated in FIG. 24.

An image 14 in Example 4 has a larger width than that of the display 101 as illustrated in FIG. 24, and is longer in a vertical direction than the display 101. The one-time password is separately displayed in the image 14. Numbers in "OTP 1: 0156" are the first four digits of the one-time password, numbers in "OTP 2: 3894" are four digits following the OTP 1 of the one-time password, and numbers in "OTP 3: 451" are the last three digits of the one-time password following the OTP 2. The OTP 1, the OTP 2 and the OTP 3 correspond to the sub-money information in the present invention. The OTP 1 is displayed in an upper right portion of the image 14, the OTP 2 is displayed in a lower left portion of the image 14, and the OTP 3 is displayed in a lower right portion of the image 14. Further, the face photo F is displayed in an upper left portion of the image 14. An arrow for providing an instruction to the user, as to a direction in which the image 14 should be scrolled is indicated below the face photo F.

In the case where the image 14 is displayed on the display 101, by scrolling the image 14 to a left side from a state in FIG. 24(A) so as to be in a state in FIG. 24(B), it becomes possible to browse the OTP 1, and by further scrolling the image 14 to an upper right side so as to be in a state in FIG. 24(C), it becomes possible to browse the OTP 2, and by further scrolling the image 14 to a left side so as to be in a state in FIG. 24(D), it becomes possible to browse the OTP 3. By scrolling the image 14 in this manner, as a result, it is possible to browse the whole of the one-time password. Meanwhile, even if the user performs such scrolling, there is no moment at which all the one-time password is displayed on the display 101 at the same time.

The image data generating unit 122B generates image data for displaying such an image 14 on the display 101. Scrolling of the image is executed in accordance with input from the input device 102.

Note that the image 14 may automatically change from the state illustrated in FIG. 24(A) to the state illustrated in FIG. 24(D) over a predetermined period, for example, for several seconds.

While the one-time password is separated into three parts of the OTP 1 to the OTP 3 in this example, it is also possible to separate the one-time password into two parts or four or more parts, and dispose the parts in the image 14 so that, when one of them is displayed, the others are not displayed on the display 101.

(Example 5)

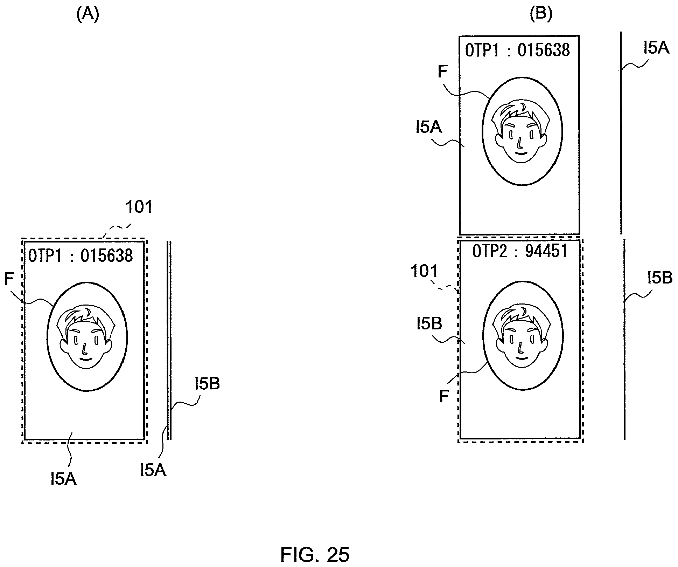

An image in this example is as illustrated in FIG. 25.

Two images of an image I5A and an image I5B are displayed on the display 101 in Example 5. As illustrated in FIG. 25, the image I5A and the image I5B have the same size as that of the display 101. "OTP 1: 015638" which is the first half six digits of the one-time password is displayed in an upper part of the image I5A, the face photo F is displayed below "OTP 1: 015638", "OTP 2: 94451" which is the last half five digits of the one-time password is displayed in an upper part of the image I5B, and the face photo F is displayed below "OTP 2: 94451".

The image I5A and the image I5B are displayed on the display 101 in an overlapped manner so that the image I5A is displayed on the image I5B. The image I5A is opaque, so that at least the OTP 2 displayed in the image I5B under the image I5A cannot be browsed through the image I5A.

The image I5A can be moved outside the display 101 by the image I5A being scrolled upward with respect to the display 101 from a state illustrated in FIG. 25(A). Then, by putting the image into a state in FIG. 25(B), the image I5B is displayed on the display 101. In the state in FIG. 25(A), the OTP 1 can be browsed, and in the state in FIG. 25(B), the OTP 2 can be browsed. As a result, it is possible to browse the whole of the one-time password. Meanwhile, even if the user performs such scrolling, there is no moment at which all the one-time password is displayed on the display 101 at the same time.

The image data generating unit 122B generates image data for displaying such an image I5A and an image I5B on the display 101. Scrolling of the image is executed in accordance with input from the input device 102.

Note that the image I5A may automatically change from the state illustrated in FIG. 25(A) to the state illustrated in FIG. 25(B) over a predetermined period, for example, for several seconds.

While the one-time password is separated into two parts of the OTP 1 and the OTP 2 and they are respectively displayed in the two images I5A and I5B in this example, it is also possible to separate the OTP into three or more parts and increase images for displaying the OTP in accordance with the number of separated parts of the OTP. In this case, the separated part of the OTP displayed in the image under the other image is made invisible through the other image which is located over the image.

(Example 6)

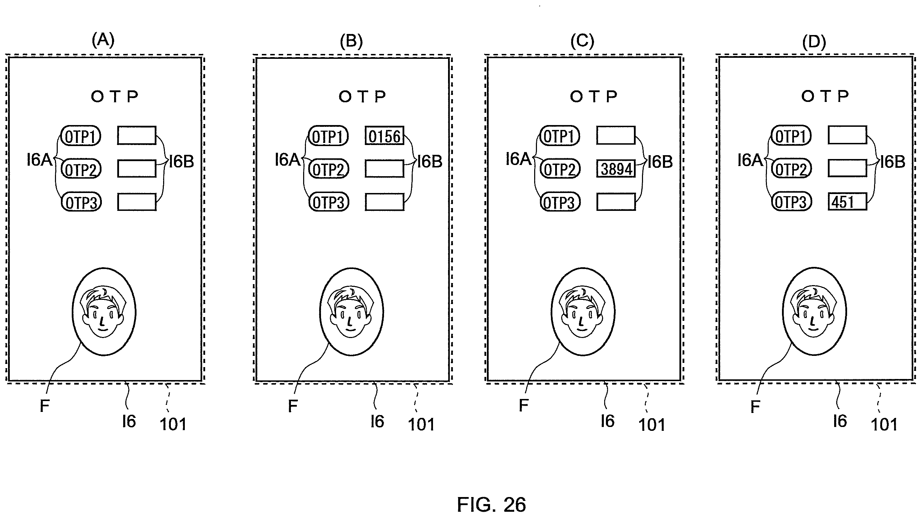

An image in this example is as illustrated in FIG. 26.

An image to be displayed on the display 101 in Example 6 is an image 16, and the image 16 has the same size as that of the display 101. In the image 16, virtual buttons I6A on which the OTP 1, the OTP 2 and the OTP 3 are respectively described are indicated, and, beside these buttons I6A, rectangular frames I6B, while not limited to these, are indicated. Below the buttons I6A and the frames I6B, the face photo F is displayed.

The buttons I6A can be respectively clicked by the user manipulating the input device 102.

By the user clicking the button I6A on which the OTP 1 is written, characters of "0156" which are the first third part of the one-time password are displayed in the frame I6B which is right adjacent to the button (FIG. 26(B)), by the user clicking the button I6A on which the OTP 2 is written, characters of "3894" which are the middle third part of the one-time password are displayed in the frame I6B which is right adjacent to the button (FIG. 26(C)), and by the user clicking the button I6A on which the OTP 3 is written, characters of "451" which are the last third part of the one-time password are displayed in the frame I6B which is right adjacent to the button (FIG. 26(D)). By the user clicking all the virtual buttons I6A on which the OTP 1, the OTP 2 and the OTP 3 are respectively described, it is possible to browse the whole of the one-time password. Meanwhile, even if the user performs such manipulation, there is no moment at which all parts of the one-time password are displayed on the display 101 at the same time. Note that, in this example, in the case where part of the one-time password is displayed within a certain frame I6B, part of the one-time password is not displayed within the other frames I6B.

The image data generating unit 122B generates image data for displaying such an image 16 on the display 101. Clicking of the button I6A is executed in accordance with input from the input device 102.

Note that the image I6A may automatically change from the state illustrated in FIG. 26(A) to the state illustrated in FIG. 26(D) over a predetermined period, for example, for several seconds.

While the one-time password is separated into three parts of the OTP 1 to the OTP 3 in this example, the number can be changed as described above.

(Example 7)

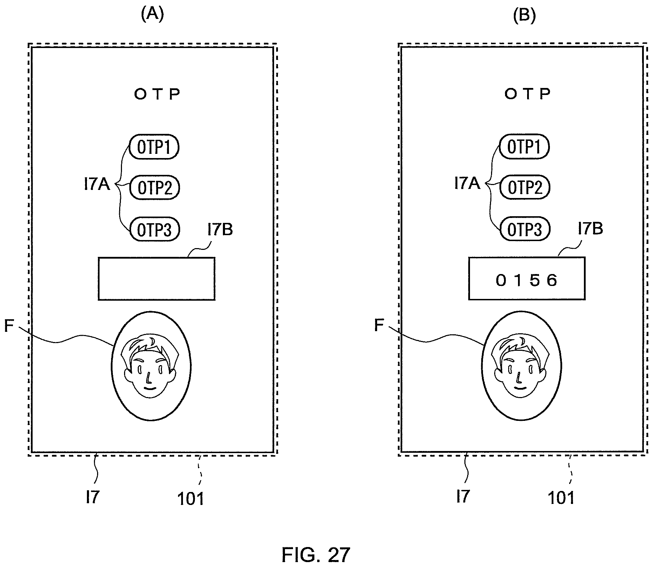

An image in this example is as illustrated in FIG. 27.

Example 7 is substantially the same as Example 6. In Example 7, an image to be displayed on the display 101 is an image 17, and the image 17 has the same size as that of the display 101. In the image 17, virtual buttons I7A on which the OTP 1, the OTP 2 and the OTP 3 are respectively described are indicated. Further, below these buttons I7A, only one rectangular frame I7B, while not limited to this, is indicated. Below the frame I7B, the face photo F is displayed.

The buttons I7A can be respectively clicked by the user manipulating the input device 102.

While nothing is displayed in the frame I7B in a state where none of the buttons I7A is clicked (FIG. 27(A)), by the user clicking the button I6A on which the OTP 1 is written, characters of "0156" which are the first third part of the one-time password are displayed within the frame I7B (FIG. 27(B)). Further, while illustration will be omitted, by the user clicking the button I7A on which the OTP 2 is written, characters of "3894" which are the middle third part of the one-time password are displayed within the frame I7B, and by the user clicking the button I7A on which the OTP 3 is written, characters of "451" which are the last third part of the one-time password are displayed within the frame I7B. By the user clicking all the virtual buttons I7A on which the OTP 1, the OTP 2 and the OTP 3 are respectively described, the user can browse the whole of the one-time password. Meanwhile, even if the user performs such manipulation, there is no moment at which all parts of the one-time password are displayed on the display 101 at the same time.

The image data generating unit 122B generates image data for displaying such an image 17 on the display 101. Clicking of the button I7A is executed in accordance with input from the input device 102.

Note that, in the image 17, display similar to that in the case where the respective buttons I7A are clicked may be automatically displayed within the frame I7B, over a predetermined period, for example, for several seconds.

While the one-time password is separated into three parts of the OTP 1 to the OTP 3 in this example, the number can be changed as described above.

(Example 8)

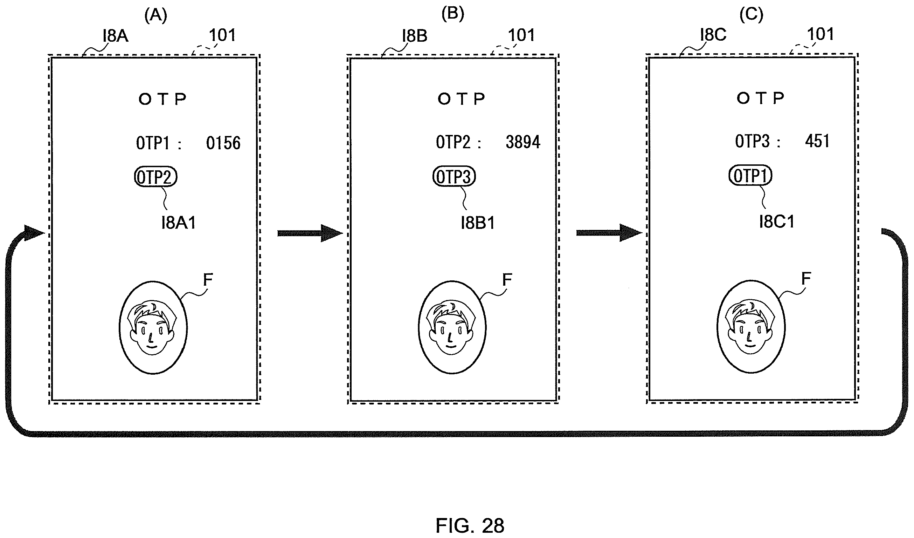

An image in this example is as illustrated in FIG. 28.

Images to be displayed on the display 101 in Example 8 are three images of an image I8A (FIG. 28(A)), an image I8B (FIG. 28(B)) and an image I8C (FIG. 28(C)). The image I8A, the image I8B and the image I8C have the same size as that of the display 101 as illustrated in FIG. 28.

"OTP 1: 0156" which is the first third part of the one-time password is indicated in an upper part of the image I8A, and a button I8A1 on which the OTP 2 is written and which can be clicked is displayed below the first part of the one-time password, and the face photo F is displayed below the button I8A1. In a similar manner, "OTP 2: 3894" which is the middle third part of the one-time password is indicated in an upper part of the image I8B, a button I8B1 on which the OTP 3 is written and which can be clicked is displayed below the middle part of the one-time password, the face photo F is displayed below the button I8B1, and "OTP 3: 451" which is the last third part of the one-time password is indicated in an upper part of the image I8C, a button I8C1 on which the OTP 1 is written and which can be clicked is displayed below the last part of the one-time password, and the face photo F is displayed below the button I8C1.

In this example, if the user clicks the button I8A1 in the image I8A illustrated in FIG. 28(A), the image I8A is switched to the image I8B illustrated in FIG. 28(B). Further, if the user clicks the button I8B1 in the image I8B, the image I8B is switched to the image I8C illustrated in FIG. 28(C). Further, if the user clicks the button I8C1 in the image I8C, the image I8C is switched to the image I8A illustrated in FIG. 28(A). That is, the images in this example are displayed in a loop manner by the button I8A1, the button I8B1 and the button I8C1 being depressed. As a result, it is possible to browse the whole of the one-time password. Meanwhile, even if the user causes the images in FIG. 28(A) to FIG. 28(C) to be displayed in a loop manner, there is no moment at which all the parts of the one-time password are displayed on the display 101 at the same time.

The image data generating unit 122B generates image data for displaying such an image I8A, an image I8B and an image I8C on the display 101. Change of the images is executed in accordance with input from the input device 102.

Note that the image I8A, the image I8B and the image I8C may automatically change from the state illustrated in FIG. 28(A) to the state illustrated in FIG. 28(C) over a predetermined period, for example, for several seconds.

While the one-time password is separated into three parts of the OTP 1 to the OTP 3 in this example, the number can be changed in a similar manner to the examples described above.

(Example 9)

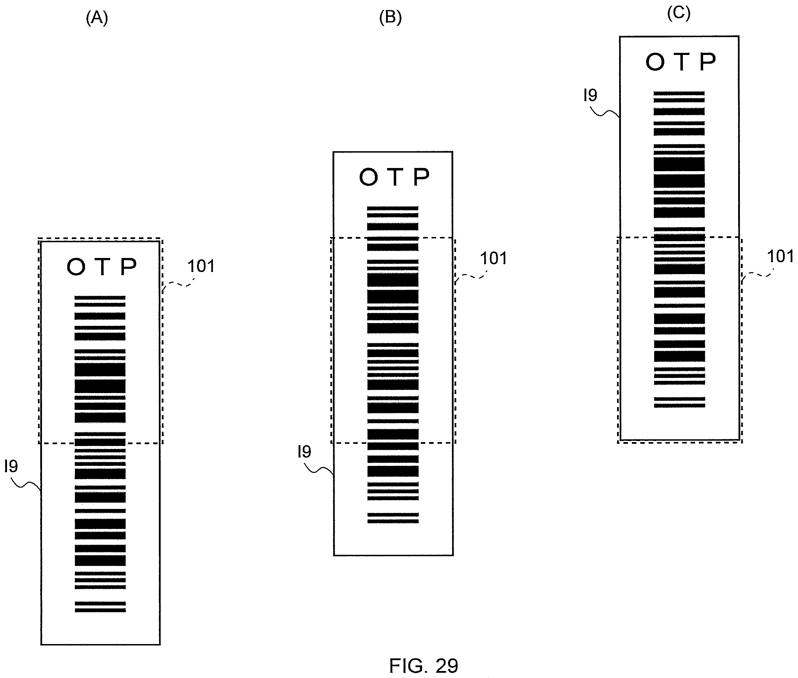

An image in this example is as illustrated in FIG. 29.

Put simply, the image in this example is an image in which the one-time password which is an example of the money information in the present invention in Example 1 is replaced with a barcode, more specifically, a one-dimensional barcode which is an example of the money specifying information in the present invention.

An image 19 in Example 9 has the same width as that of the display 101 as illustrated in FIG. 29, and is longer in a vertical direction than the display 101. A one-dimensional barcode from which it is possible to specify the one-time password of "01563894451" is displayed in the image 19 fully in a vertical direction of the image 19.

In the case where the image 19 is displayed on the display 101, for example, by the image 19 being vertically scrolled in a downward direction from a state in FIG. 29(A) to a state in FIG. 29(B), and then to a state illustrated in FIG. 29(C), it is possible to browse the whole of the one-dimensional barcode. Meanwhile, even if the user performs such scrolling, there is no moment at which all parts of the one-dimensional barcode as the money specifying information necessary for specifying the one-time password are displayed on the display 101 at the same time.

The image data generating unit 122B generates image data for displaying such an image 19 on the display 101. Note that scrolling of the image is executed in accordance with input from the input device 102.

Note that the image 19 may automatically change from the state illustrated in FIG. 29(A) to the state illustrated in FIG. 29(C) over a predetermined period, for example, for several seconds. In this case, the image data generating unit 122B generates data of such a moving image.

It is also possible to include the face photo at a predetermined location, for example, in a lower part of the image 19.

(Example 10)

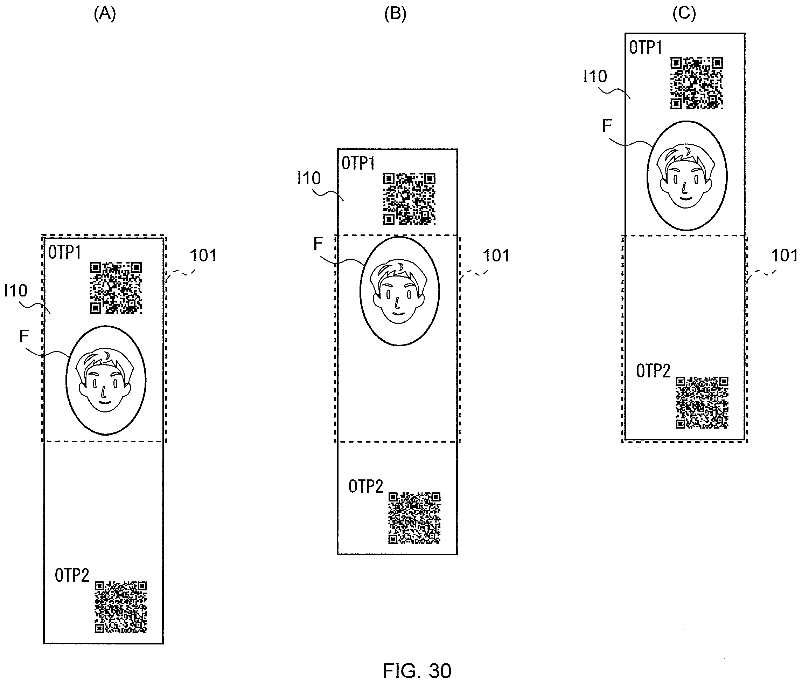

An image in this example is as illustrated in FIG. 30.

An image I10 in Example 10 is an image in which the OTP 1 and the OTP 2 which are an example of the sub-money information in the present invention in Example 3 is replaced with a barcode, more specifically, a two-dimensional barcode which is an example of the sub-money specifying information in the present invention.

Here, the sub-money specifying information is information such that the money information can be specified by combination of a plurality of pieces of sub-money specifying information. In this example, two two-dimensional barcodes are included in the image I10. The two two-dimensional barcodes may be, for example, barcodes which respectively specify one part and the other part of the one-time password, for example, the OTP 1 and the OTP 2 in Example 3. Further, it is possible to set the two two-dimensional barcodes such that one of the two-dimensional barcodes specifies enumeration of numbers of, for example, 100 digits which are larger than the number of digits of "01563894451" which is the one-time password, and the other specifies which part of the enumeration of the long numbers is the one-time password.

Note that while the number of two-dimensional barcodes used as the sub-money specifying information in this example is two, the number is not limited to this. Further, it is not necessary to use the two-dimensional barcodes as the sub-money specifying information. These similarly apply to other examples.

As illustrated in FIG. 30, the image I10 has the same width as that of the display 101, and is longer in a vertical direction than the display 101. The two-dimensional barcodes are indicated at the top and at the bottom of the image I10. Further, the face photo F is displayed immediately below the upper two-dimensional barcode.

In the case where the image I10 is displayed on the display 101, by the image I10 being vertically scrolled in a downward direction, for example, from a state in FIG. 30(A) to a state in FIG. 30(B), and, then, to a state illustrated in FIG. 30(C), it is possible to browse the two two-dimensional barcodes, and, as a result, it is possible to browse the whole of the sub-money specifying information which is necessary for specifying the one-time password. Meanwhile, even if the user performs such scrolling, there is no moment at which all of the sub-money specifying information is displayed on the display 101 at the same time.

The image data generating unit 122B generates image data for displaying such an image I10 on the display 101. Note that scrolling of the image is executed in accordance with input from the input device 102.

Note that the image I10 may automatically change from the state illustrated in FIG. 30(A) to the state illustrated in FIG. 30(C) over a predetermined period, for example, for several seconds.

(Example 11)

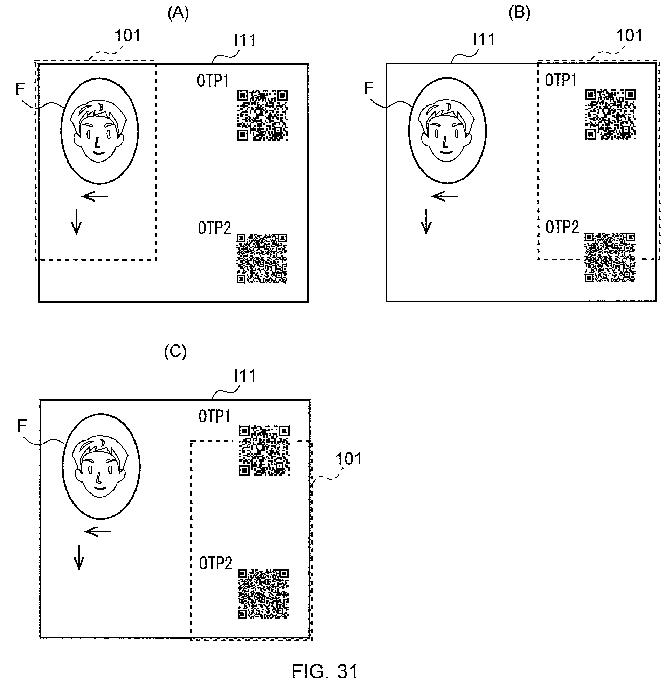

An image in this example is as illustrated in FIG. 31.

The image in Example 11 is an image in which the OTP 1, the OTP 2 and the OTP 3 which are an example of the sub-money information in the present invention in Example 4 is replaced with the two two-dimensional barcodes which are an example of the sub-money specifying information in the present invention.

As illustrated in FIG. 31, the image I11 has a width larger than that of the display 101, and is longer in a vertical direction than the display 101. The two barcodes are disposed in an upper right part and in a lower right part of the image I11, and the face photo F is displayed in an upper left part of the image I11. An arrow which instructs the user in which direction the image I11 should be scrolled is indicated below the face photo F.

In the case where the image I11 is displayed on the display 101, by the image I11 being scrolled to a left side from a state in FIG. 31(A) to a state in FIG. 31(B), it becomes possible to browse a first barcode, and, by the image I11 being scrolled further downward to a state in FIG. 31(C), it becomes possible to browse a second barcode. By the image I11 being scrolled in this manner, as a result, it is possible to browse the whole of the barcode. Meanwhile, even if the user performs such scrolling, there is no moment at which all of a plurality of barcodes are displayed on the display 101 at the same time.

Note that, in the states in FIG. 31(B) and 31(C), to be exact, both of the two barcodes are displayed on the display 101. However, to be more exact, in FIG. 31(B), part of the lower barcode is not displayed, and in FIG. 31(C), part of the upper barcode is not displayed. In the present invention, because the sub-money specifying information, part of which is not displayed in this manner, does not function as the sub-money specifying information, the sub-money specifying information is dealt as the information which is not displayed on the display 101. This will similarly apply to the sub-money information.

The image data generating unit 122B generates image data for displaying such an image I11 on the display 101. Scrolling of the image is executed in accordance with input from the input device 102.

Note that the image I11 may automatically change from the state illustrated in FIG. 31(A) to the state illustrated in FIG. 31(C) over a predetermined period, for example, for several seconds.

(Example 12)

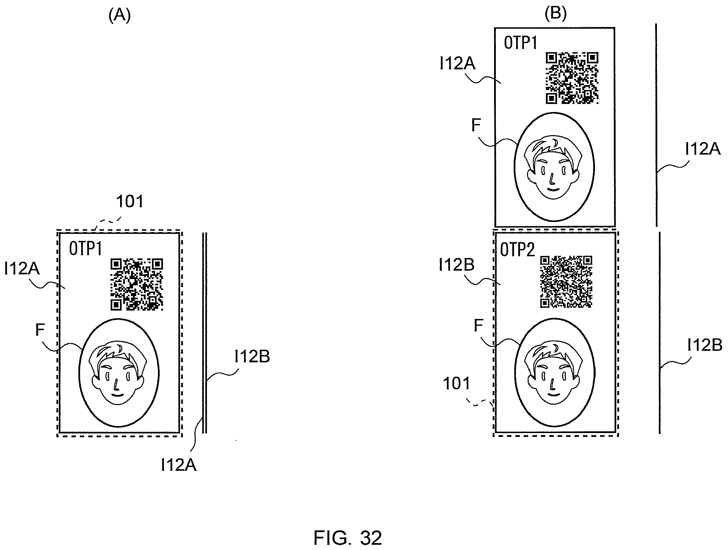

An image in this example is as illustrated in FIG. 32.

The image in Example 12 is an image in which the OTP 1 and the OTP 2 which are an example of the sub-money information in the present invention in Example 5 is replaced with the two two-dimensional barcodes which are an example of the sub-money specifying information in the present invention.

In a similar manner in Example 5, the images to be displayed on the display 101 in Example 12 are two images of an image I12A and an image I12B. As illustrated in FIG. 32, the image I12A and the image I12B have the same size as that of the display 101. A first barcode is displayed in an upper part of the image I12A, the face photo F is displayed below the first barcode, and the image I12B is configured in a similar manner.

The image I12A and the image I12B are displayed on the display 101 in an overlapped manner so that the image I12A is displayed on the image I12B. The image I12A is opaque, so that at least the barcode displayed in the image I12B under the image I12A cannot be browsed through the image I12A.

A state of the image I12A can be changed from a state illustrated in FIG. 32(A) to a state in FIG. 32(B) in a similar manner to the case in Example 5. In the state in FIG. 32(A), the first barcode can be browsed, and in the state in FIG. 32(B), a second barcode can be browsed. As a result, it is possible to browse the whole of the two barcodes. Meanwhile, even if the user performs such scrolling, there is no moment at which all of the plurality of barcodes are displayed on the display 101 at the same time.

The image data generating unit 122B generates image data for displaying such an image I12A and an image I12B on the display 101. Scrolling of the image is executed in accordance with input from the input device 102.

Note that the image I12A may automatically change from the state illustrated in FIG. 32(A) to the state illustrated in FIG. 32(B) over a predetermined period, for example, for several seconds.

(Example 13)

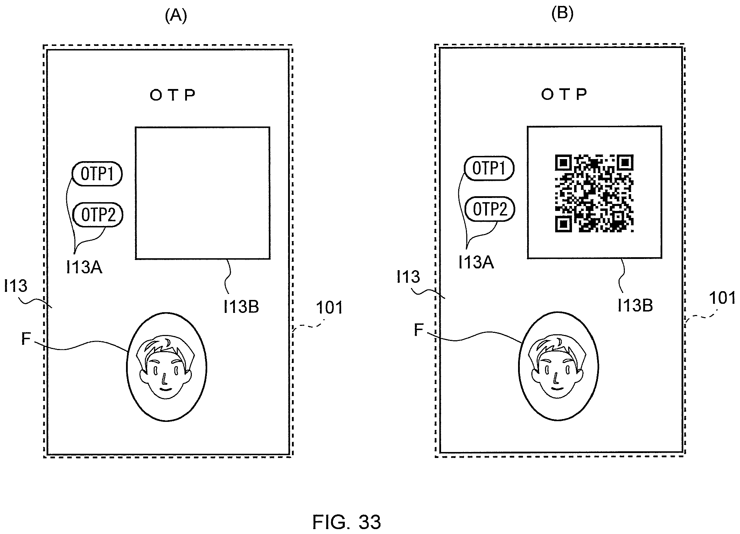

An image in this example is as illustrated in FIG. 33.

The image in Example 13 is an image in which the OTP 1, the OTP 2 and the OTP 3 which are an example of the sub-money information in the present invention in Example 7 are replaced with the two two-dimensional barcodes which are an example of the sub-money specifying information in the present invention.

The image to be displayed on the display 101 in Example 13 is an image 113, and the image 113 has the same size as that of the display 101. In the image 113, virtual buttons I13A on which the OTP 1 and the OTP 2 are respectively described are indicated. Further, on the right side of these buttons I13A, one rectangular frame 113, while not limited to this, is indicated. The face photo F is displayed below the frame I13B.

The buttons I13A can be respectively clicked by the user manipulating the input device 102.

While nothing is displayed within the frame I13B in a state where none of the buttons I13A is clicked (FIG. 33(A)), by the user clicking the button I13A on which the OTP 1 is written, a two-dimensional barcode which is the same as the upper two-dimensional barcode in Example 10 is displayed within the frame I13B (FIG. 33(B)). Further, while not illustrated, by the user clicking the button I13A on which the OTP 2 is written, a two-dimensional barcode which is the same as the lower two-dimensional barcode in Example 10 is displayed within the frame I13B. By the user clicking all the virtual buttons I13A on which the OTP 1 and the OTP 2 are respectively described, it is possible to browse the whole of the two two-dimensional barcodes. Meanwhile, even if the user performs such manipulation, there is no moment at which all the two-dimensional barcodes are displayed on the display 101 at the same time.

The image data generating unit 122B generates image data for displaying such an image 113 on the display 101. Clicking of the button I13A is executed in accordance with input from the input device 102.

Note that, in the image 113, display similar to that in the case where the respective buttons I13A are clicked may be automatically displayed within the frame I13B, over a predetermined period, for example, for several seconds.

(Example 14)

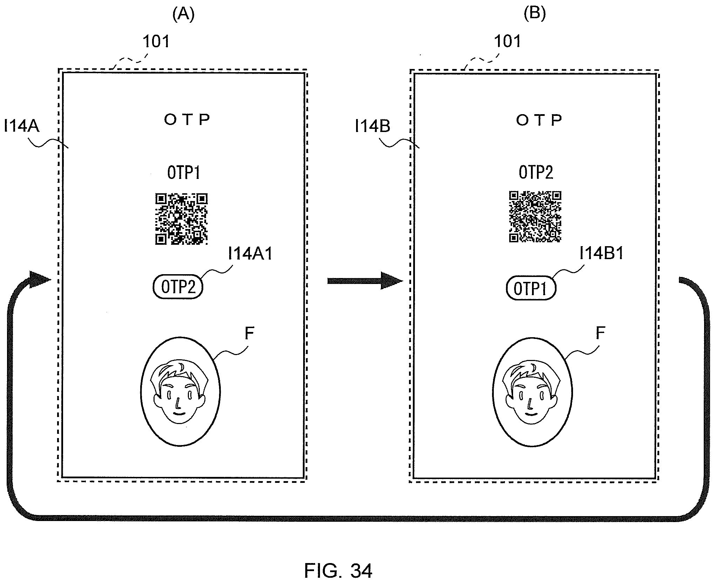

An image in this example is as illustrated in FIG. 34.

The image in Example 14 is an image in which the OTP 1, the OTP 2 and the OTP 3 which are an example of the sub-money information in the present invention in Example 8 is replaced with two two-dimensional barcodes which are an example of the sub-money specifying information in the present invention.

Images to be displayed on the display 101 in Example 14 are two images of an image I14A (FIG. 34(A)) and an image I14B (FIG. 34(B)). Both the image I14A and the image I14B have the same size as that of the display 101 as illustrated in FIG. 34.

A first two-dimensional barcode is indicated in an upper part of the image I14A, and a button I14A1 on which the OTP 2 is written and which can be clicked is displayed below the first two-dimensional barcode, and the face photo F is displayed below the button I14A1. In a similar manner, a second two-dimensional barcode is indicated in an upper part of the image I14B, a button I14B1 on which the OTP 1 is written and which can be clicked is displayed below the second two-dimensional barcode, and the face photo F is displayed below the button I14B1.

In this example, if the user clicks the button I14A1 in the image I14A illustrated in FIG. 34(A), the image I14A is switched to the image I14B illustrated in FIG. 34(B). Further, if the user clicks the button I14B1 in the image I14B, the image I14B is switched to the image I14A illustrated in FIG. 34(A). That is, the images in this example are displayed in a loop manner by the button I14A1 and the button I14B1 being depressed. As a result, it is possible to browse both the two two-dimensional barcodes. Meanwhile, even if the user causes the images in FIG. 34(A) and FIG. 34(B) to be displayed in a loop manner, there is no moment at which all the two two-dimensional barcodes are displayed on the display 101 at the same time.

The image data generating unit 122B generates image data for displaying such an image I14A and an image I14B on the display 101. Change of the images is executed in accordance with input from the input device 102.

Note that the image I14A and the image I14B may automatically change from the state illustrated in FIG. 34(A) to the state illustrated in FIG. 34(B) over a predetermined period, for example, for several seconds.

As described above, the one-time password itself or the one-dimensional or two-dimensional barcode is displayed on the display 101 of the user terminal.

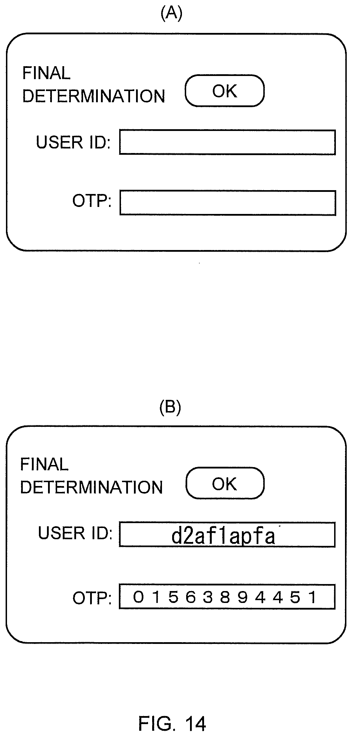

As described above, the settlement terminal 300 includes a touch panel display which is not illustrated. In the touch panel display, display, for example, as illustrated in FIG. 14(A), which encourages the user, or the like, to input the user ID and the one-time password, is performed. Such display is performed by the display control unit 322 under control of the main control unit 321 of the settlement terminal 300. The user, or the like, input the user ID on the right side of a portion indicated as the user ID, and input the one-time password on the right side of a portion indicated as the OTP by manually manipulating the touch panel display. It is assumed in this embodiment that the user inputs the user ID, and the manager, or the like, of the settlement terminal 300 to whom the one-time password, or the like, is presented by the user inputs the one-time password to the settlement terminal 300.

If the one-time password or the barcode is displayed on the display 101 of the user terminal 100, the user presents the one-time password or the barcode to the manager of the settlement terminal 300. The manager of the settlement terminal 300 inputs the one-time password itself to the settlement terminal 300 in the case where the one-time password is presented, and inputs the barcode to the settlement terminal 300 in the case where the barcode is presented. In either case, the manager of the settlement terminal 300 can input the one-time password to the settlement terminal 300 or hand over the one-time password to the settlement terminal 300 from the user terminal 100 (S931). If the user generates the one-time password in advance, the user will not have trouble handing over the one-time password to the settlement terminal 300.

Here, in the case where the one-time password itself is displayed on the display 101 of the user terminal 100, in cases of Example 1 to Example 8 in the above-described example, the manager of the settlement terminal 300 to whom the one-time password is presented can manually input the one-time password to the settlement terminal 300 using the input device such as the above-described touch panel provided at the settlement terminal 300. In cases of the above-described Example 1 and Example 2, because the one-time password itself is displayed on the display 101 of the user terminal 100, the manager of the settlement terminal 300 can manually type the displayed one-time password in the settlement terminal 300. Meanwhile, in cases of Example 3 to Example 8, because the one-time password is displayed in a state where the one-time password is separated into the OTP 1 and the OTP 2 or the OTP 1 to the OTP 3 corresponding to the sub-money information in the present invention, the manager of the settlement terminal 300 can, for example, manually input the one-time password to the settlement terminal 300 after seeing all the separated one-time passwords.

Meanwhile, manual input is troublesome and is likely to cause an error. Particularly, the number of digits (the number of characters) of the one-time password is large, and, for example, if the number of digits becomes equal to or larger than 100 digits, there is a possibility that manual input is virtually impossible. In such a case, for example, it is possible to provide a camera at the settlement terminal 300, and input to the settlement terminal 300, the one-time password specified by capturing an image of the one-time password displayed on the display 101 of the user terminal 100 with the camera provided at the settlement terminal 300 to obtain image data and performing image processing on the obtained image data. The image processing is, for example, processing of optical character recognition (OCR) on the image specified by the image data. In cases of Example 1 and Example 2, the camera can capture all images of the one-time passwords by capturing a moving image or capturing still images of the number corresponding to all the one-time passwords. Further, in cases of Example 3 to Example 8, it is possible to capture all images of the one-time passwords by capturing still images of both the OTP 1 and the OTP 2 or capturing still images of all of the OTP 1 to the OTP 3 or capturing all of them as a moving image. In the case where the image captured with the camera is a moving image, by performing the processing of OCR on necessary frames in the moving image and extracting the one-time password, it is possible to input the one-time password to the settlement terminal 300.

Further, in the case where, in place of the one-time password itself, the barcode as the money specifying information in the present invention is displayed on the display 101 of the user terminal 100, in cases of Example 9 to Example 14 in the above-described examples, the manager of the settlement terminal 300 to whom the one-time password is presented needs to input the one-time password to the settlement terminal 300 using a reading device for reading the money specifying information provided at the settlement terminal 300 instead of manually inputting the one-time password. For example, in a case of Example 9, by a barcode reader for one-dimensional barcode which is a publicly-known or well-known reading device being attached to the display 101 of the user terminal 100, and by the image 19 displayed on the display 101 being scrolled downward, it becomes possible to cause the barcode reader to read the one-dimensional barcode and, thereby, input the one-time password to the settlement terminal 300. Further, in cases of Example 10 to Example 14, because the money specifying information is displayed on the display 101 as two or three barcodes corresponding to the sub-money specifying information in the present invention, the manager of the settlement terminal 300 can input the one-time password to the settlement terminal 300 by causing a two-dimensional barcode reader as the reading device to read all of the barcodes this time. Note that, as described above, the sub-money specifying information is information from which the money information can be specified by combining a plurality of pieces of the sub-money specifying information. For example, in the case where there are two pieces of sub-money information, that is, in the case where there are two two-dimensional barcodes, the two two-dimensional barcodes may be ones from which one part and the other part of the one-time password, for example, the OTP 1 and the OTP 2 in Example 3, are respectively specified, or can be ones in which, from one of the two-dimensional barcodes, enumeration of the number of digits, for example, 100 digits larger than the number of digits of "01563894451" which is the one-time password, is specified, and from the other of the two-dimensional barcodes, which part of the enumeration of the long numbers is the one-time password is specified. In the case where the sub-money information is used, the settlement terminal 300 shares such a rule with the user terminal 100, and is configured to be able to specify the one-time password from a plurality of pieces of the sub-money specifying information at the settlement terminal 300. This can be, for example, easily achieved by a computer program required for this being installed to the settlement terminal 300 and functional blocks required for this being generated within the computer.

Note that, if the face photo F is displayed on the display 101 whatever image is displayed on the display 101 of the user terminal 100, the manager of the settlement terminal 300 can perform face authentication as described above when inputting the one-time password or the user ID to the settlement terminal 300.

As described above, the user ID and the one-time password are input to the settlement terminal 300 (FIG. 14(B)).

In any case, if input of the user ID, the password and the amount information is finished, the user or the manager of the settlement terminal 300 clicks the button on which "OK" is written, displayed on the display.

If the user, or the like, clicks the button on which "OK" is written, the input content is transmitted from the data input/output unit 323 to the main control unit 321. If the main control unit 321 receives the input content, the main control unit 321 generates the settlement application information. The settlement application information is information which requests final determination of the settlement to the settlement device 200 by the manager of the settlement terminal 300. The settlement application information further includes the settlement terminal ID for specifying the settlement terminal 300. The main control unit 321 transmits the settlement application information, the user ID and the one-time password in a lump to the transmitting/receiving unit of the settlement terminal 300 via the data input/output unit 323 and transmits them to the settlement device 200 from the transmitting/receiving unit via the network 400 (S932).

The settlement device 200 receives these three pieces of data transmitted from the settlement terminal 300 at the transmitting/receiving unit (S925). The settlement application information, the user ID and the one-time password transmitted from the settlement terminal 300 are transmitted to the main control unit 222 via the data input/output unit 221.

The main control unit 222 transmits data of the settlement application information, the user ID and the one-time password transmitted from the settlement terminal 300 to the final determining unit 225. The final determining unit 225 which receives these pieces of data reads out the location information associated with the settlement terminal ID included in the settlement application information, from the location information recording unit 226.

Meanwhile, when the main control unit 222 receives the settlement application information, or the like, the main control unit 222 transmits an instruction to generate the one-time password to the OTP generating unit 227.

The user ID received by the main control unit 222 is attached to the instruction to generate the one-time password. The OTP generating unit 227 reads out the initial value associated with the user ID corresponding to the user ID and the number of times of generation from the OTP information recording unit 228.

Processing of generating the one-time password to be performed by the OTP generating unit 227 using information of the initial value and the number of times of generation, recorded in the OTP information recording unit 228 is completely the same as processing executed at the OTP generating unit 124 of the user terminal 100 specified by the user ID transmitted along with the settlement application information which has become a trigger of providing the instruction to generate the one-time password. Therefore, unless there is abuse by a third party somewhere in generation of the one-time password performed at the user terminal 100, transmission of the one-time password from the settlement terminal 300 to the settlement device 200, or the like, processing of generating the one-time password performed at the user terminal 100 is in complete synchronization with processing of generating the one-time password performed at the settlement device 200.

After the OTP generating unit 227 generates the one-time password, the OTP generating unit 227 transmits the one-time password to the final determining unit 225 via the main control unit 222.

Before the final determining unit 225 reads out the location information from the location information recording unit 226 and receives the one-time password generated by the OTP generating unit 227, from the OTP generating unit 227, there has already existed the one-time password which is generated at the user terminal 100 and transmitted from the settlement terminal 300 via the main control unit 222, the location information also generated at the user terminal 100 and transmitted from the user terminal 100 via the main control unit 222, and time information generated at the credit determining unit 223 and transmitted via the main control unit 222 in the final determining unit 225.

The final determining unit 225 performs final determination using these kinds of information (S926).

The final determination is performed as follows.

In the final determination in this embodiment, the final determining unit 225 compares the one-time password generated by the user terminal 100 and transmitted from the settlement terminal 300 with the one-time password generated by the OTP generating unit 227, and determines whether or not the one-time passwords match each other. It is necessary that the both one-time passwords match each other as one of conditions for determining in final determination that the settlement is possible. The reason why it is effective to set such conditions is because, if the both one-time passwords match each other, it is possible to assume that there is no impersonation by a malicious third party, of a person who has generated the one-time password using the user terminal 100 and the manager of the settlement terminal 300 which has transmitted the one-time password, and there is no abuse such as an attack by a malicious third party in all steps of the settlement also while the one-time password is transmitted from the settlement terminal 300 to the settlement device 200.

Further, in the final determination in this embodiment, the final determining unit 225 compares the location information generated by the user terminal 100 and transmitted from the user terminal 100 with the location information read out from the location information recording unit 226 to determine whether or not a distance between the locations specified by the both pieces of the location information is closer than a predetermined distance. In this embodiment, it is necessary that a distance between the locations specified by the both pieces of the location information be closer than the predetermined distance, for example, 20 meters, while not necessarily limited to this, as one of conditions for determining in the final determination that the settlement is possible. The reason why it is effective to such conditions is as described below. The location information transmitted from the user terminal 100 indicates, in short, where the user terminal 100 is located. The location information read out from the location information recording unit 226 indicates, in short, where the settlement terminal 300 is located. Then, when a distance between the locations specified by the both pieces of the location information is close, the user who manipulates the user terminal 100 and the manager of the settlement terminal 300 are located close to each other. In most cases, the user and the manager of the settlement terminal 300 who is to receive payment from the user are located close to each other when payment is made. For example, in a case of payment at a restaurant, other eating places, a shop of a physical store, or the like, such circumstances occur necessarily rather than commonly. By confirming whether a distance between the user and the settlement terminal 300 is close to each other by comparing the two pieces of location information as described above, a possibility of being able to prevent a third party from impersonating the user or the manager of the settlement terminal 300 increases. Moreover, while the location of the settlement terminal 300 is fixed to some extent, because the user moves, it is difficult for a third party who does not know where the user is located to impersonate the user. Therefore, setting a result of comparison between the two pieces of location information as conditions for allowing the settlement is very meaningful. Note that while security of the settlement using this settlement system increases as a distance (for example, in the above-described case, 20 meters) to be used as a basis as to whether or not the locations specified by the both pieces of location information are "close" to each other is smaller, this distance to be used as the basis only has to be appropriately determined in accordance with performance (such as accuracy of the location of the user terminal 100 specified by the location information), or the like, of the GPS mechanism included in the user terminal 100.

Meanwhile, there is a case where the settlement terminal 300 does not exist at a physical store. For example, in a case of payment at a virtual store existing on the Internet, on-line settlement is performed as is widely known. In this case, setting a distance between the user and the settlement terminal 300 as conditions for allowing the settlement is not so meaningful. While not necessarily limited to this, in this embodiment, in the case where the settlement terminal 300 does not exist at the physical store, as in the case of the settlement terminal ID4 in FIG. 8, the location information of the settlement terminal 300 is not recorded in the location information recording unit 226. In this case, the settlement device 200 can refrain from (or omit) comparing the two pieces of location information as described above to make final determination. It is also possible to prevent use of the location information in the whole of this settlement system.

In the final determination in this embodiment, the final determining unit 225 compares time specified by the time information generated by the credit determining unit 223 with time at which the final determination is made and determines whether or not a time interval is within a predetermined time interval. While not necessarily limited to this, it is necessary that the time interval be within the predetermined time interval as one of conditions for determining in the final determination that the settlement is possible. The reason why it is effective to set such conditions is because, by shortening the time interval, it is possible to shorten a period during which a third party can steal and abuse the one-time password generated at the user terminal 100, so that it is possible to further increase security of the settlement. Note that, it is assumed in this embodiment that the time at which the credit determination is performed at the credit determining unit 223 is used as a starting point for measuring the above-described time interval, and the time at which the final determination is made at the final determining unit 225 is used as an end point for measuring the above-described time interval. However, particularly, the starting point for measuring the above-described time interval is not limited to the above-described timing. The starting point for measuring the above-described time interval can be made an appropriate timing after the user performs initial input necessary for processing for this settlement by manipulating the input device 102 of the user terminal 100 and before the final determining unit 225 makes the final determination. That is, an arbitrary timing after S911 is started and before the final determination is made at the final determining unit 225, particularly, an arbitrary time point until a moment at which the tentative allowance information reaches the user terminal 100 from the settlement device 200 can be made the starting point for measuring the above-described time interval. For example, a timing at which the amount information is input at the user terminal 100, a timing at which the button on which characters of "OK" are displayed, displayed on the display 101 of the user terminal 100 is clicked, a timing at which the amount information, or the like, transmitted from the user terminal 100 is received at the settlement device 200, a timing at which the credit determination is started at the credit determining unit 223, a timing at which transmission of the tentative allowance information from the settlement device 200 to the user terminal 100 is started, or the like, becomes examples of the starting point which can be employed. Note that, in this settlement system, it is also possible not to provide expiration date at the one-time password generated at the user terminal 100.

In this embodiment, only when it is determined that all of the above-described three conditions are satisfied, the final determining unit 225 of the settlement device 200 makes final determination to allow payment from the user possessing the user terminal 100 to the manager of the settlement terminal 300. In the case where any of the three conditions is not satisfied, the final determining unit 225 makes final determination not to allow the payment. These both types of determination are referred to as final determination.

In the case where the final determining unit 225 makes final determination, the final determining unit 225 generates final determination data which is data indicating a result of the final determination (S927), and transmits the final determination data to the main control unit 222 along with the user ID. In the case where payment is allowed in the final determination, the main control unit 222 which has received the final determination data performs processing for allowing payment of money of the amount specified by the amount information which has become a trigger for generation of the one-time password from the user who possesses the user terminal 100 which has generated the one-time password used for making the final determination, to the manager of the settlement terminal 300 which has transmitted the one-time password used for making the final determination. The result of this processing is recorded in a recording medium which is not illustrated, and which is built in the main control unit 222 or is located inside or outside of the settlement device 200, and if the result is required for implementing processing of the payment, a relating financial institution, or the like, is notified of the result. A content to be recorded in the recording medium is at least information for specifying the user who has made payment, information for specifying a person who is to receive the payment and the one-time password used for the payment. The one-time password is recorded to prevent payment from being allowed twice with the same one-time password. Further, the main control unit 222 which has received the final determination data subtracts an amount corresponding to the money which is allowed to be paid from the user to the manager of the settlement terminal 300 as part of the processing of payment. The money corresponding to the subtracted amount may be sent to the manager of the settlement terminal 300 which has received the payment instantaneously or the settlement device 200 or the manager of the settlement device 200 may hold the money once. If the user written on the second field from the top in the credit information recording unit 224 pays 25,000 yen, the main control unit 222 subtracts 25,000 yen from the 2,956,002 yen which is the balance in the account and rewrites the balance in the account to 2,931,002 yen.

Further, the main control unit 222 does not perform the above-described processing in the case where payment is not allowed in the final determination.

Meanwhile, the main control unit 222 transmits the content of the final determination data to the data input/output unit 221 and transmits the content of the final determination data to the settlement terminal 300 which has transmitted the settlement application information to be used as the basis of the final determination via the transmitting/receiving unit and the network 400 (S928).

The settlement terminal 300 receives the final determination data from the settlement device 200 (S933). The settlement terminal 300 receives this data at the transmitting/receiving unit. The data received by the transmitting/receiving unit is transmitted from the transmitting/receiving unit to the data input/output unit 323 and transmitted from the data input/output unit 323 to the main control unit 321.

The main control unit 321 controls the display control unit 322 so as to display a content based on the final determination data on the display. Appropriate display is performed on the display of the settlement terminal 300 by control by the display control unit 322 (S934). If the content of the final determination data indicates allowance of payment, the display indicates the allowance of the payment, and if the content of the final determination data indicates denial of payment, the display indicates the denial of the payment.

Note that the settlement device 200 may transmit the content of the final determination data also to the user terminal 100 as well as the settlement terminal 300. In this case, on the display 101 of the user terminal 100, the content based on the final determination data which is similar to that displayed on the display of the settlement terminal 300 is displayed.

The flow of the settlement performed in the settlement system in this embodiment has been described above.

However, there is a case where the settlement performed as described above is cancelled. In such a case, processing is executed in accordance with the following flow.

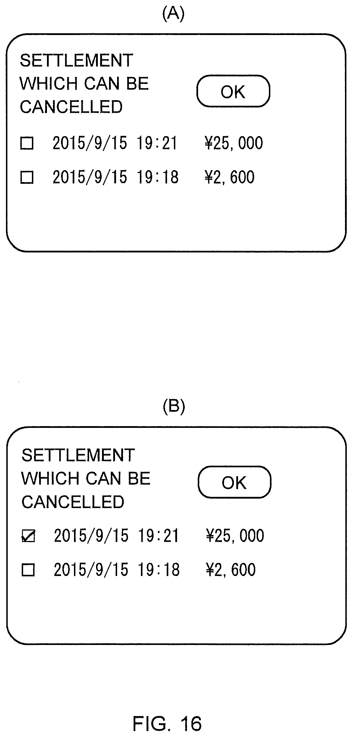

It is assumed that the user and the manager of the settlement terminal 300 desire to cancel the settlement which has been made in the past for any reason. At this time, the user manipulates the input device 102 of the user terminal 100 to call a screen for cancelling the settlement on the display 101. An example of display on the display 101 at that time is illustrated in FIG. 16. Note that, in this example, it is assumed that the above-described settlement of 25,000 yen which has been made by the user whose user ID is d2aflapfa is to be cancelled.

As illustrated in FIG. 16, a list of items of the past settlement which can be cancelled is displayed on the display 101. Because, in this embodiment, items of settlement which can be cancelled among the items of the past settlement are limited to items of the settlement within, for example, 10 minutes after the settlement has been finished at the settlement device 200, there will be not many items of past settlement displayed here. In FIG. 16(A), two pieces of payment of the payment of 25,000 yen made at 19:21 on September 15, 2015, and the payment of 2,600 yen made at 19:18 on September 15, 2015 are displayed on the display 101 as targets which can be cancelled. The user selects one of them using the input device 102. FIG. 16(B) illustrates a state where the former out of the two pieces of payment which are targets to be cancelled is selected. If the user clicks the button on which OK is written, user terminal cancellation information including information specifying the payment of 25,000 yen made at 19:21 on September 15, 2015 as a target for cancellation is generated. The user terminal cancellation information is generated by the main control unit 121 which has accepted input from the input device 102 via the data input/output unit 123. The user terminal cancellation information is transmitted from the main control unit 121 to the transmitting/receiving unit via the data input/output unit 123 and transmitted from the transmitting/receiving unit to the settlement device 200 via the network 400.

Meanwhile, the manager of the settlement terminal 300 also performs similar processing to generate settlement terminal cancellation information. The manager of the settlement terminal 300 manipulates the input device of the settlement terminal 300 to cause a screen similar to that illustrated in FIG. 16 to be displayed on the display of the settlement terminal 300. A list of the items of the past settlement which can be cancelled is displayed on the display. While, in this embodiment, the items of settlement which can be cancelled among the items of the past settlement are limited to the settlement within, for example 10 minutes after the settlement has been finished at the settlement device 200, because, typically, the number of items of settlement made using one settlement terminal 300 is larger than the number of items of settlement made using one user terminal 100, more items of settlement than those illustrated in FIG. 16 will be displayed on the display of the settlement terminal 300. The manager of the settlement terminal 300 manipulates the input device of the settlement terminal 300 to select one of the items of settlement. To prevent the manager of the settlement terminal 300 from erroneously selecting the settlement, it may be convenient if, as information for specifying the past settlement, information for specifying the user who has made the settlement, for example, the user ID is also displayed on the display in addition to date and the amount of the settlement displayed in the example illustrated in FIG. 16. By the manager of the settlement terminal 300 manipulating the input device, the settlement terminal cancellation information including information specifying the payment of 25,000 yen made at 19:21 on September 15, 2015 by the user whose user ID is d2aflapfa is generated. The settlement terminal cancellation information is generated by the main control unit 321 which has accepted input from the input device via the data input/output unit 323. The settlement terminal cancellation information is transmitted to the transmitting/receiving unit from the main control unit 321 via the data input/output unit 323 and transmitted from the transmitting/receiving unit to the settlement device 200 via the network 400.

The settlement device 200 receives the user terminal cancellation information and the settlement terminal cancellation information at the transmitting/receiving unit. These are transmitted to the main control unit 222 via the data input/output unit 221. In the case where the main control unit 222 receives these two pieces of the information, the main control unit 222 determines whether or not the past settlement specified by the user terminal cancellation information is the same as the past settlement specified by the settlement terminal cancellation information. As a result, in the case where the past settlement specified by the user terminal cancellation information is the same as the past settlement specified by the settlement terminal cancellation information, the main control unit 222 performs processing for cancelling the past settlement. In a case where only one of the user terminal cancellation information and the settlement terminal cancellation information is received, or in a case where, although these two pieces of the information are received, the past settlement specified by the user terminal cancellation information is not the same as the past settlement specified by the settlement terminal cancellation information, the main control unit 222 does not perform processing for cancelling the past settlement. The main control unit 222 records a result of cancellation of the settlement in, for example, a recording medium which is built in the main control unit 222, and which is not illustrated and, if the result is required for implementing the processing of the cancellation, notifies a relating financial institution, or the like, of the result. Further, the main control unit 222 cancels the above-described rewriting of the balance in the account performed at the credit information recording unit 224 and returns the balance in the account to the balance in the account before the payment.

The above-described processing of cancellation becomes more practical if used as follows.

Because the one-time password in this embodiment which is used as the credit card number in the conventional credit card is basically used only once, that is, a so-called single-use password, a possibility of plagiarism is extremely low, and can be hardly assumed. However, in this embodiment, a possibility that the one-time password generated at the user terminal 100 is stolen by a third party until the user transmits the one-time password to the settlement device 200 via the settlement terminal 300 and is used by the third party cannot be denied although the possibility is extremely low.

In the above-described embodiment, the user ID, or signature or information such as a fingerprint and characteristics of a vein which are another information for specifying the user, is transmitted from the settlement terminal 300 to the settlement device 200. Among these, if biological information such as a fingerprint and characteristics of a vein is used as a material for specifying the user who tries to make payment using the one-time password transmitted from the settlement terminal 300, it may be extremely difficult for the third party who has stolen the one-time password to impersonate a legitimate user. However, in a case where the material to be transmitted from the settlement terminal 300 to the settlement device 200 for specifying the user along with the one-time password is only the user ID, because the user ID is normally fixed and is not changed, in a case where the user ID as well as the one-time password are stolen, there can occur a situation where it is not possible to prevent impersonation by the third party. Further, as will be described later in a Modified Example, in the case where the one-time password is transmitted from the settlement terminal 300 to the settlement device 200, it is possible not to attach any information for specifying the user who has generated the one-time password at the user terminal 100 of the user, such as the user ID. In such a case, if the one-time password is generated after the tentative allowance information is generated as a result of identity of the user being verified and determination of credit for solvency of the user being passed, when the one-time password is used, the one-time password has characteristics of cash, check, or the like, which allows anyone as well as the user who has generated the one-time password using the user terminal 100 of the user to make payment by handing over the one-time password to the other person. In the case where the settlement system handles such a one-time password, the third party who has stolen the one-time password can use the one-time password by impersonating the user who has generated the one-time password at the user terminal 100 of the user.

It is possible to prevent such abuse of the one-time password by the third party through the above-described processing of cancellation.

As described above, in the settlement system of this embodiment, the final determination data is transmitted from the settlement device 200 to the settlement terminal 300, and the content indicated in the final determination data is displayed on the display provided at the settlement terminal 300.

Here, it is assumed that the one-time password is abused by a third party. For example, it is assumed that the one-time password which has been stolen from the settlement terminal 300 managed by a person other than the counterpart to whom the user is to hand over the one-time password which is generated by the user at the user terminal 100 of the user to make payment, is transmitted to the settlement device 200. In this case, there is a case where the payment with the one-time password is allowed by the final determining unit 225 of the settlement device 200. Of course, as described above, it is necessary in this embodiment that all of the three conditions be satisfied for the final determining unit 225 to make positive determination on the payment with the one-time password transmitted from the settlement terminal 300, the conditions including a condition that the one-time passwords match each other, a condition that the user terminal 100 and the settlement terminal 300 are close to each other, and a condition that the one-time password does not expire. Therefore, even if the one-time password stolen from the user and transmitted to the settlement device 200 matches the one-time password created at the OTP generating unit 227 of the settlement device 200, unless other two conditions are satisfied, the final determining unit 225 does not allow the settlement. However, there is a case where the two conditions are satisfied, or a case where these two conditions are not taken into account at the final determining unit 225 in the first place, because these two conditions are not necessarily essential in the settlement system in this embodiment. In such a case, if the above-described condition that the one-time passwords match each other is satisfied, the final determining unit 225 of the settlement device 200 allows payment with the one-time password.

In this case, the final determination data is transmitted from the settlement device 200 to the settlement terminal 300. Such final determination data indicates that the settlement is allowed. However, a problem here lies in that the manager of the settlement terminal 300 which is to receive the payment is different from the counterpart to whom the user originally intends to make payment. In this stage, the final determination data does not arrive at the settlement terminal 300 for which the counterpart to whom the user originally tries to make payment is set as the manager. Meanwhile, as described above, there is a case where the final determination data is also transmitted to the user terminal 100. However, if the final determination data is transmitted to the user terminal 100 in this stage, the final determination data has content indicating that the settlement device 200 allows payment to the counterpart to whom the user does not originally intend to make payment. Although it depends on an extent of information to be displayed on the display 101 of the user terminal 100, there is a possibility that the user may not notice that the one-time password generated at the user terminal 100 of the user is abused by a third party from the content.

Meanwhile, it is assumed that, after the one-time password generated by the user at the user terminal 100 of the user has already been used by a third party, that is, after payment to someone has been settled with the one-time password, the user hands over the one-time password to the counterpart to whom the user originally intends to make payment. In this case, the one-time password is transmitted from the settlement terminal 300 for which the counterpart is set as the manager, to the settlement device 200. However, because the one-time password has already been used in the past payment, the final determining unit 225 of the settlement device 200 does not allow the payment with the one-time password again. For example, it is possible to determine that the one-time password has been utilized in the past (for example, within a range of a predetermined period) by the final determining unit 225 performing search as to whether or not there is a one-time password which is the same as the one-time password which is now a target of final determination among the one-time passwords recorded in the above-described recording medium, and, if there exists the same one-time password, it is possible to determine that the one-time password has been utilized in the past.

In this manner, in this case, the final determination data transmitted from the settlement device 200 to the settlement terminal 300 indicates that the settlement cannot be allowed. The manager of the settlement terminal 300 who should originally receive the payment tells the user who has handed over the one-time password, that the settlement is not allowed at the settlement device 200.

The user who has been told this, recognizes that the one-time password has been abused in the past, and may execute the above-described processing of cancellation. By this means, it is possible to prevent abuse of the one-time password. Note that the settlement device 200 can grasp that the one-time password is tried to be used the second time as described above. The settlement device 200 may notify the user terminal 100 that the one-time password is tried to be used the second time or there is a person who tries to abuse the one-time password.

[Modified example]

A settlement system in a Modified Example will be described. The settlement system in this Modified Example is configured in a similar manner to the settlement system in the first embodiment, and flow of settlement to be executed by the settlement system is similar to that in the case of the settlement system in the first embodiment.

The settlement system in the Modified Example is different from the settlement system in the first embodiment in a timing of generation of the one-time password, a method for generating the one-time password, and a way to perform the final determination at the final determining unit 225 of the settlement device 200, and, in accordance with this, there is change in data to be transmitted from the settlement terminal 300 to the settlement device 200.

In the first embodiment, as described above, in the case where the settlement application information and the one-time password are transmitted from the settlement terminal 300 to the settlement device 200, the user ID is also transmitted along with them.

Because the one-time password which is generated at the user terminal 100 and transmitted from the settlement terminal 300 is compared with the one-time password generated at the OTP generating unit 227 of the settlement device 200 at the final determining unit 225, the one-time password generated at the user terminal 100 requires to be transmitted from the settlement terminal 300 to the settlement device 200 along with the settlement application information. Meanwhile, in the first embodiment, the reason why transmission of the user ID is required for transmitting the settlement application information and the one-time password from the settlement terminal 300 to the settlement device 200 is described such that "because conditions for the settlement device 200 to generate the one-time password are different for each user (for example, in this embodiment, while the initial values allocated to the respective users are different, it is also possible to change an equation, that is, algorithm to be used for each user), to determine which conditions among conditions different for each user are used to generate the one-time password at the settlement device 200, the information for specifying the user is required". That is, in the first embodiment, the following logic is employed that: while the one-time password which is generated at the user terminal 100 and transmitted from the settlement terminal 300 is compared with the one-time password generated at the OTP generating unit 227 of the settlement device 200 at the final determining unit 225, to make the both one-time passwords match each other during processing of the settlement, it is necessary to generate the one-time password for the user who requests the settlement; However, because it is impossible to generate a correct one-time password unless the user who requests the settlement can be specified, in the first embodiment, the user ID for specifying the user is also transmitted from the settlement terminal 300 to the settlement device 200 along with the settlement application information and the one-time password. Therefore, in the first embodiment, the user ID or information such as signature, a fingerprint and characteristics of a vein which is another information for specifying the user is transmitted from the settlement terminal 300 to the settlement device 200 along with the settlement application information and the one-time password.

However, even if information for specifying the user such as the user ID, the signature, the fingerprint and the characteristics of the vein is not transmitted from the settlement terminal 300 to the settlement device 200 in addition to the settlement application information and the one-time password, it is possible to correctly compare the one-time password generated at the user terminal 100 with the one-time password generated at the settlement device 200, at the final determining unit 225 of the settlement device 200.

This Modified Example relates to such a settlement system.

As described above, while, in the settlement system in the Modified Example, while the one-time password generated at the user terminal 100 is attached to the settlement application information when the settlement application information is transmitted from the settlement terminal 300 to the settlement device 200, information including the user ID for specifying the user who tries to make the settlement is not attached.

Meanwhile, in the settlement system in the Modified Example, a timing at which the OTP generating unit 227 generates the one-time password is different from that in the first embodiment. In the first embodiment, while the one-time password is generated when the instruction to generate the one-time password is received from the main control unit 222, such an instruction is issued after the main control unit 222 receives the settlement application information and the one-time password transmitted from the settlement terminal 300, from the data input/output unit 221.

However, in this Modified Example, the OTP generating unit 227 generates the one-time password at the same time as the credit determining unit 223 generates the tentative allowance information or later without delay, at least before the settlement application information and the one-time password are transmitted from the settlement terminal 300. While not limited to this, in this Modified Example, if the tentative allowance information generated by the credit determining unit 223 is transmitted from the credit determining unit 223 to the main control unit 222, the main control unit 222 transmits the instruction to generate the one-time password to the OTP generating unit 227 along with the user ID which is a target of the tentative allowance information. The OTP generating unit 227 which has received this instruction generates the one-time password for the user having the user ID using the user ID received from the main control unit 222, more accurately, using the initial value associated with the user ID. A method for generating the one-time password itself may be the same as that in the case of the first embodiment. The OTP generating unit 227 transmits the generated one-time password to the final determining unit 225 without delay. In this Modified Example, the processing so far is finished at the same time as the credit determining unit 223 generates the tentative allowance information or later without delay, at least before the settlement application information and the one-time password are transmitted from the settlement terminal 300.

The final determining unit 225 holds the one-time password transmitted from the OTP generating unit 227. In this case, the final determining unit 225 holds a number of one-time passwords for a number of users generated by the OTP generating unit 227 by users who hold the respective user terminals 100 trying to make payment.

It is assumed that, when such a circumstance occurs, one user transmits the one-time password generated at the user terminal 100 of the user to the settlement device 200 along with the settlement application information through the settlement terminal 300. A method for the user to hand over or presenting the one-time password to the manager of the settlement terminal 300 can be made the same as that in the case of the first embodiment.

In either case, the settlement application information and the one-time password transmitted from the settlement terminal 300 via the network 400 are received at the transmitting/receiving unit of the settlement device 200, and transmitted to the main control unit 222 via the data input/output unit 221. The main control unit 222 transmits the received settlement application information and one-time password to the final determining unit 225.

At this time, the final determining unit 225 holds the one-time password received from the main control unit 222 and a number of one-time passwords which are generated by the OTP generating unit 227 and which have already been received from the OTP generating unit 227. The final determining unit 225 compares the one-time password received from the main control unit 222 with the number of one-time passwords which are generated by the OTP generating unit 227 and which have already been received from the OTP generating unit 227. In a case where the one-time password received from the main control unit 222 matches one of the number of the one-time passwords which are generated by the OTP generating unit 227 and which have already been received from the OTP generating unit 227, the final determining unit 225 allows payment from the user to the manager of the settlement terminal 300 which has transmitted the settlement application information and the one-time password, and, in a case where the one-time password received from the main control unit 222 matches none of the number of the one-time passwords which are generated by the OTP generating unit 227 and which have already been received from the OTP generating unit 227, the final determining unit 225 does not allow the payment. While the final determining unit 225 compares the one-time password generated at the user terminal 100 with the number of the one-time passwords generated by the OTP generating unit 227, particularly, in the case where expiration date is provided at the one-time password generated at the user terminal 100, the number of one-time passwords generated at the OTP generating unit 227 of the settlement device 200 during a period after processing of settlement using one user terminal 100 is started and the tentative allowance information is generated until the settlement application information for payment of the same user is transmitted from the settlement terminal 300 to the settlement device 200 does not become enormous while it becomes numerous, and there is little possibility that the same one-time passwords are generated among the one-time passwords for a plurality of users created at the OTP generating unit 227 during this period.

Therefore, the final determining unit 225 can generate the final determination data correctly in a similar manner to the case in the first embodiment also using the method of this Modified Example.

When the final determining unit 225 makes final determination, as in the case of the first embodiment, the location information can be utilized, and the time information can be utilized.

However, in a case of the Modified Example, first, the one-time password generated at the user terminal 100 and transmitted via the settlement terminal 300 is compared with the number of the one-time passwords generated at the OTP generating unit 227 of the settlement device 200, and in the case where there exists the one-time password which matches the one-time password transmitted from the settlement terminal 300 among the number of the one-time passwords generated at the OTP generating unit 227, it is only necessary to specify location information of the user terminal 100 associated with the user ID used upon generation of the one-time password which matches the one-time password transmitted from the settlement terminal 300 among the number of the one-time passwords generated at the OTP generating unit 227, as location information of the user terminal 100 side, which is to be used for final determination, in distinction from location information transmitted from other user terminals 100.

In a similar manner, it is only necessary to specify time information associated with the user ID used upon generation of the one-time password which matches the one-time password transmitted from the settlement terminal 300 among the number of the one-time passwords generated at the OTP generating unit 227, as time information to be used for final determination, in distinction from time information when the tentative allowance information which is created for making settlement using other user terminals 100 is created.

By this means, it is possible to correctly generate the final determination data.

*«Second embodiment»*

A settlement system in a second embodiment will be described.

The settlement system in the second embodiment is substantially the same as the settlement system in the first embodiment, and flow of processing of settlement is substantially the same as that in the case of the first embodiment.

In a similar manner to the case in the first embodiment, the settlement system in the second embodiment is configured to include a number of user terminals 100, one settlement device 200 and a number of settlement terminals 300, all of which can be connected to a network 400.

Put briefly, the settlement system in the second embodiment is different from the settlement system in the first embodiment in that, while, in the settlement system in the first embodiment, the user does not express his/her intention concerning to whom the user makes payment, to the settlement device 200, in the settlement system in the second embodiment, the user expresses his/her intention concerning to whom the user makes payment, to the settlement device 200.

To realize this, the settlement system in the second embodiment is configured as follows. A configuration of the settlement system in the second embodiment will be described while flow of processing to be performed in the second embodiment is described.

First, the user terminal 100 in the second embodiment will be described.

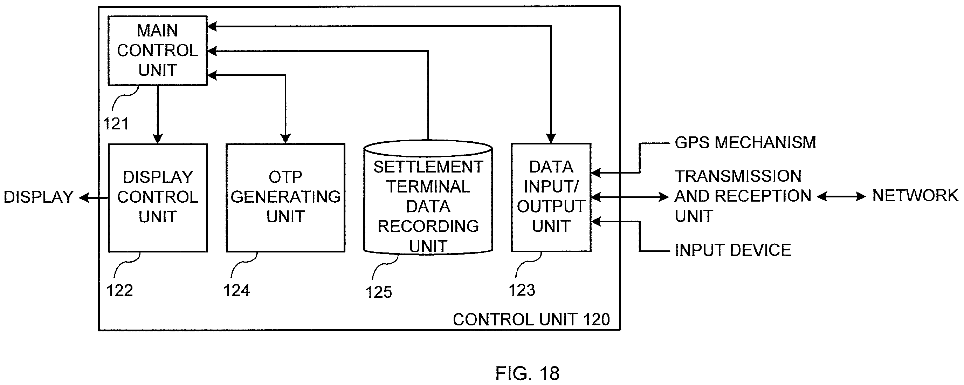

Also in the second embodiment, the user terminal 100 includes a control unit 120 which performs information processing similar to that in the case of the first embodiment. While it is assumed that the control unit 120 is similar to the control unit 120 at the user terminal 100 in the first embodiment, the control unit 120 in the second embodiment includes a settlement terminal data recording unit 125 which does not exist in the case of the first embodiment (FIG. 18).

The settlement terminal data recording unit 125 records data concerning the settlement terminal 300. Specifically, data as illustrated in FIG. 8, which is recorded in the location information recording unit 226 of the settlement device 200 in the first embodiment, is recorded in the settlement terminal data recording unit 125. That is, in the settlement terminal data recording unit 125, the settlement terminal IDs and the location information of the respective settlement terminals 200 are recorded in association with each other. Meaning of the settlement terminal ID and the location information of the settlement device 200 is the same as that in the first embodiment. Further, the settlement terminal IDs and the location information recorded in the settlement terminal data recording unit 125 completely match those recorded in the location information recording unit 226 of the settlement device 200. However, in the settlement terminal data recording unit 125, in addition to the settlement terminal IDs and the location information of the respective settlement terminals 200, name, phone number and address of restaurants or stores in which the respective settlement terminals 200 are placed, logos, or the like, which are useful for the user to recognize the restaurants or the stores may be recorded in association with the respective settlement terminal IDs.

In the settlement system in the first embodiment, in the case where the user starts processing of the settlement in S911, the user continuously inputs the user ID, the password and the settlement amount to the user terminal 100 of the user.

Meanwhile, in the settlement system in the second embodiment, the user inputs information specifying a payee to whom payment is to be made in addition to the user ID, the password and the settlement amount to the user terminal 100 of the user. The information specifying the payee is practically information specifying the settlement terminal 300 placed at a store, or the like, which becomes the payee.

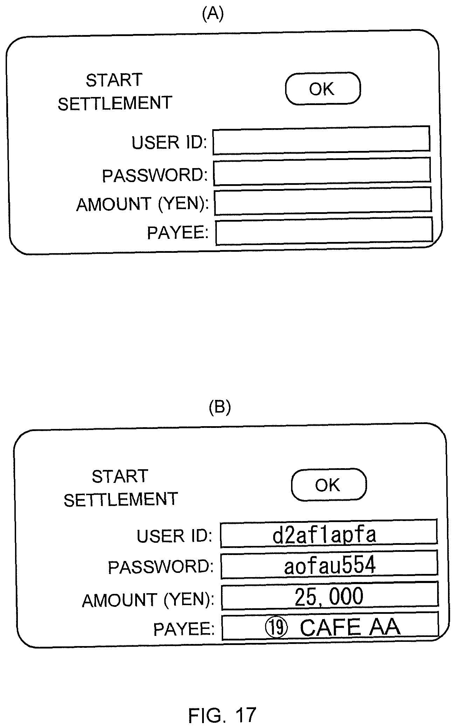

In the second embodiment, if the processing of settlement is started, the image as illustrated in FIG. 17(A) is displayed on the display 101 of the user terminal 100. Unlike with the case in the first embodiment, such an image in the case of the second embodiment encourages the user to input the information specifying the payee in addition to the user ID, the password and the settlement amount. Such an image is generated by the display control unit 122 under control by the main control unit 121 and displayed on the display 101 by the display control unit 122 in a similar manner to the case in the first embodiment.

The user inputs the user ID, the password and the settlement amount using the input device 102 in a similar manner to the case of the first embodiment. Further, the user inputs the information for specifying the payee. While the information of the payee can be input by the user typing name, or the like, of the store which is the payee, if emphasis is placed on reduction in burden on the user and reduction in input errors by the user, it is preferable that the user selects a store, or the like, of the payee from predetermined candidates. In this embodiment, the user selects a store, or the like, of the payee from predetermined candidates although an input method is not limited to this.

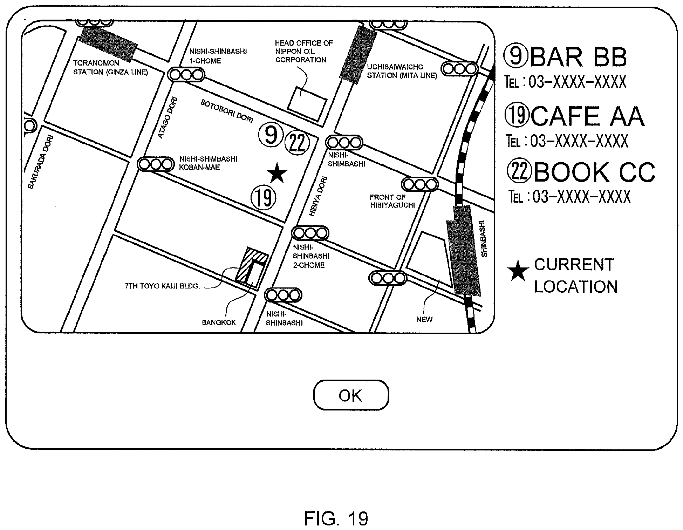

In this embodiment, when the user tries to input a payee, a window as illustrated in FIG. 19 pops up. In the window, candidates of stores, or the like, which exist near a current location of the user indicated with an asterisk, and in which the settlement terminals 300 are placed are displayed on a map indicating a location near a current place of the user, for example, as circled numbers of 9, 19 and 22. The circled numbers of 9, 19, and 22 are, while not limited to this, equal to the settlement terminal IDs in this embodiment. Further, outside the map, in this example, on the right side of the map, name and phone number of the respective stores, or the like, are displayed in association with the above-described reference numerals of 9, 19 and 22 indicated on the map so as to help the user correctly select a store, or the like.

Selection of a range of a map to be displayed, specification of a current location of the user displayed on the map, and selection of a store, or the like, which become candidates for a payee are determined by the main control unit 121 using the location information indicating the current location of the user terminal 100, transmitted from the GPS mechanism of the user terminal 100 to the main control unit 121 via the data input/output unit 123. In this embodiment, at this time point, the GPS mechanism generates location information for the location where the user terminal 100 is located. Further, creation of information regarding a store, or the like, to be displayed outside the map is also performed by the main control unit 121. Note that the main control unit 121 may perform part of such processing by utilizing software recorded in external cloud connected via the network 400. In this case, for example, the settlement terminal data recording unit 125 can exist outside the user terminal 100.

Specifically, the main control unit 121 selects a range of the map to be displayed on the display 101 using a publicly-known or well-known method which is used in, for example, Google Map (trademark) provided by Google Inc. on the basis of the location information indicating the current location of the user terminal 100 to perform the above-described display on the display 101. Further, the main control unit 121 can specify the current location of the user terminal 100 by the location information and displays a mark of an asterisk at the current location on the map. Further, the main control unit 121 reads out data such as name and phone number of these store, or the like, associated with the location information, in addition to the settlement terminal ID of the settlement terminal 300 having location information specifying a location near the location specified by the location information indicating the current location of the user terminal 100, from the settlement terminal data recording unit 125. By the settlement terminal IDs enclosed with circles at locations on the map indicated by the location information of the store, or the like, being displayed at the respective pieces of location information, it is possible to display a store, or the like, which are located near the location of the user and which can be candidates for a store to which the user is to make payment, on the map. Further, it is possible to display name, phone number, or the like, of these store, or the like, associated with the settlement terminal IDs outside the map. Of course, the number of candidates for a store, or the like, to be displayed is not limited to three. The main control unit 121 transmits these kinds of information to the display control unit 122 and causes the display control unit 122 to display the image as illustrated in FIG. 19 on the display 101.

The user manipulates the input device 102 to select one of candidates of 9, 19 and 22 and clicks a button on which OK is written. By this means, the window illustrated in FIG. 19 which has popped up is closed, and, as illustrated in FIG. 17(B), the settlement terminal ID and name of the store, or the like, selected by the user are automatically written within a frame on the right side of a portion indicated as the payee. In this example, "CAFE AA" in which the settlement terminal 300 whose settlement terminal ID is 19 is placed at the store, or the like, is selected as a counterpart to whom the user is to make payment. Display on the display 101 is also controlled by the display control unit 122 under control by the main control unit 121. By this means, the user ID, the password, the settlement amount and the information specifying the payee are input to the user terminal 100. These four pieces of information are transmitted from the data input/output unit 123 to the main control unit 121.

After input of the user ID, the password, the amount information and the information for specifying the payee is finished, the user clicks the button on which "OK" is written, displayed on the display 101.

If the user clicks the button on which "OK" is written, the main control unit 121 transmits the location information, and the terminal information recorded in the recording means of the main control unit 121, which is not illustrated, in addition to the user ID, the password, the amount information and the information specifying the payee all in a lump to the data input/output unit 123. The data input/output unit 123 transmits these kinds of data to the transmitting/receiving unit in a lump, and the transmitting/receiving unit transmits these kinds of data to the settlement device 200 via the network 400 in a lump. This corresponds to processing in S913 in the first embodiment.

The settlement device 200 receives these kinds of data in a similar manner to the processing in S921 in the first embodiment and executes credit determination in a similar manner to the processing in S922 in the first embodiment. A way of handling each kind of information transmitted from the user terminal 100 to the settlement device 200 other than the information for specifying the payee in the second embodiment is the same as that in the case of the first embodiment. Further, because the information for specifying the payee transmitted from the user terminal 100 to the settlement device 200 is not used in the processing of the credit determination in the second embodiment, the processing of the credit determination in the second embodiment is the same as the processing of the credit determination in the first embodiment.

The information for specifying the payee is transmitted from the data input/output unit 221 to the final determining unit 255 via the main control unit 222 in the second embodiment. It is only necessary that the final determining unit 255 receive the information for specifying the payee when the final determining unit 255 makes final determination.

The respective kinds of processing of generation of the tentative allowance information (S923) and transmission of the tentative allowance information (S924) to be executed at the settlement device 200, reception of the tentative allowance information (S914) and generation of the one-time password (S915) to be executed at the user terminal 100, input of the user ID and the one-time password (S931) and transmission of the user ID and the one-time password (S932) to be performed at the settlement terminal 300 and processing of reception of the user ID and the one-time password (S925) to be performed at the settlement device 200, described in the first embodiment, are similarly executed in the second embodiment.

In such process, the same method as that in the case of the first embodiment can be used as a method for the user to hand over or present the one-time password to the manager of the settlement terminal 300.

Then, in a similar manner to the first embodiment, the final determination is executed (S926).

In the final determination in the first embodiment, the one-time password generated by the user terminal 100 and transmitted from the settlement terminal 300 is compared with the one-time password generated by the OTP generating unit 227, and it is necessary that the one-time passwords match each other as the first condition for the settlement to be allowed in the final determination. Further, the location information generated by the user terminal 100 and transmitted from the user terminal 100 is compared with the location information read out from the location information recording unit 226, and it is necessary that a distance between the locations specified by the both pieces of the location information is closer than a predetermined distance as the second condition for the settlement to be allowed in the final determination. Then, the time specified by the time information generated by the credit determining unit 223 is compared with the time at which the final determination is performed, and it is necessary that the time interval is within a predetermined time interval as the third condition for the settlement to be allowed in the final determination. Then, only in the case where all of the three conditions are satisfied, the final determining unit 225 generates the positive final determination data which allows the settlement.

Meanwhile, in the second embodiment, the settlement terminal ID generated by the user terminal 100 and transmitted from the user terminal 100 is compared with the settlement terminal ID of the settlement terminal 300 which becomes a transmission source of the settlement application information, or the like, and it is necessary that they match each other as the fourth condition for the settlement to be allowed in the final determination. That is, in this embodiment, only in the case where all of the four conditions described above are satisfied, the final determining unit 225 allows the settlement. Note that, among the above-described conditions, the second and the third conditions can be omitted in a similar manner to the first embodiment.

Processing after the final determination data is generated, to be executed in the settlement system of the second embodiment is similar to that in the case of the first embodiment.

**Claims**

1.  A portable user terminal comprising:

    a display on which an image can be displayed; and
    display control means which controls an image to be displayed on the display,
    wherein the display control means is configured to be able to display a money image which is an image including money information which is comprised of numbers, characters, symbols or enumeration of two or more types of the numbers, the characters and the symbols, and which is information having monetary value, on the display, and is configured to control the image to be displayed on the display so that all the money information is not displayed on the display at the same time.

2.  The user terminal according to claim 1, further comprising:

    input means which allows a user to perform input,
    wherein the display control means is configured to change the image displayed on the display on condition that there is input from the input means, so that all the money information is displayed on the display as predetermined time passes.

3.  The user terminal according to claim 1,
    wherein the display control means is configured to automatically change the image displayed on the display as time passes, so that all the money information is displayed on the display as predetermined time passes.

4.  The user terminal according to claim 2,
    wherein the display control means is configured to make the money image larger than a display range of the display and allows all the money information to be browsed on the display only in a case where the user scrolls the money image by performing input from the input means.

5. The user terminal according to claim 4,
wherein the money information is combination of a plurality of pieces of sub-money information, and the respective pieces of the sub-money information are disposed at different locations in the money image.

6. The user terminal according to claim 2,
wherein the display control means is configured to display the money image on the display in a state where a plurality of sub-money images respectively including sub-money information which is at least part of the money information are overlapped with each other, the money information is formed by combining the sub-money information included in all the sub-money images, and the sub-money information in the sub-money image disposed in a lower layer is invisible through the sub-money image disposed in an upper layer of the sub-money image, and is configured to allow all of the sub-money information to be browsed on the display by the user respectively scrolling the sub-money images to cause all the sub-money images to be displayed on the display.

7. The user terminal according to claim 2,
wherein the display control means is configured to allow all the sub-money information to be browsed on the display by generating the money image as an image including in part sub-money information which is at least part of the money information and changing the sub-money information every time there is input from the input means, and by causing the money image to be displayed on the display until all pieces of the sub-money information displayed so far are combined to be the money information

8. The user terminal according to claim 1,
wherein the display control means is configured to display a face of a person who is to make payment using the money information in the money image.

9. A portable user terminal comprising:

a display on which an image can be displayed; and
display control means which controls an image to be displayed on the display,
wherein the display control means is configured to be able to display a money specifying information image which is an image including money specifying information which is comprised of numbers, characters, symbols or enumeration of two or more types of the numbers, the characters and the symbols, and which is information specifying money information which is information having monetary value, and is configured to control an image to be displayed on the display so that all the money specifying information is not displayed on the display at the same time.

10. The user terminal according to claim 9, comprising:

input means which allows a user to perform input,
wherein the display control means is configured to change the image displayed on the display on condition that there is input from the input means, so that all the money specifying information is displayed on the display as predetermined time passes.

11. The user terminal according to claim 9,
wherein the display control means is configured to automatically change the image displayed on the display as time passes, so that all the money specifying information is displayed on the display as predetermined time passes.

12. The user terminal according to claim 10,
wherein the display control means is configured to make the money specifying information image larger than a display range of the display and allows all the money specifying information to be browsed on the display only in a case where the user scrolls the money specifying information image by performing input from the input means.

13. The user terminal according to claim 12,
wherein the money specifying information is a plurality of pieces of sub-money specifying information, and the respective pieces of the money specifying information divided into a plurality of pieces are disposed at different locations in the money specifying information image.

14. The user terminal according to claim 10,
wherein the display control means is configured to display the money specifying information image on the display in a state where a plurality of sub-money specifying information images are overlapped with each other, a plurality of the sub-money specifying information images respectively including sub-money specifying information which is information specifying the money specifying information by being combined, and the sub-money specifying information in the sub-money specifying information image disposed in a lower layer is invisible through the sub-money specifying information image disposed in an upper layer of the sub-money specifying information image, and is configured to allow all the sub-money specifying information to be browsed on the display by causing all the sub-money specifying information images to be displayed on the display by the user respectively scrolling the sub-money specifying information images.

15. The user terminal according to claim 10,
wherein the display control means is configured to allow all the sub-money specifying information to be browsed on the display by generating the money specifying information image as an image including in part one of a plurality of pieces of sub-money specifying information which is information specifying the money specifying information by being combined, and causing all the sub-money specifying information to be displayed on the display by changing the sub-money specifying information every time there is input from the input means.

16. The user terminal according to claim 9,
wherein the display control means is configured to display a face of a person who is to make payment using the money information in the money specifying information image.

17. A method to be executed by a computer of a portable user terminal including a display on which an image can be displayed, and the computer which controls an image to be displayed on the display, the method comprising:

a step of displaying, to be executed by the computer, on the display a money image which is an image including money information which is comprised of numbers, characters, symbols or enumeration of two or more types of the numbers, the characters and the symbols, and which is information having monetary value,
wherein in the step of displaying the money image on the display, the money image is displayed on the display so that all the money information is not displayed on the display at the same time.

18. A method to be executed at a computer of a portable user terminal including a display on which an image can be displayed, and the computer which controls an image to be displayed on the display, the method comprising:

a step of displaying, to be executed by the computer, on the display a money specifying information image which is an image including money specifying information which is comprised of numbers, characters, symbols or enumeration of two or more types of the numbers, the characters and the symbols, and which is information specifying money information which is information having monetary value,
wherein, in the step of displaying the money specifying information image on the display, the money specifying information image is displayed on the display so that all the money specifying information is not displayed on the display at the same time.

19. A computer program for causing a portable computer including a display on which an image can be displayed and the computer which controls an image to be displayed on the display, to execute
a step of displaying on the display a money image which is an image including money information which is comprised of numbers, characters, symbols or enumeration of two or more types of the numbers, the characters and the symbols, and which is information having monetary value,
wherein, in the step of displaying the money image on the display, the computer displays the money image so that all the money information is not displayed on the display at the same time.

20. A computer program for causing a portable computer including a display on which an image can be displayed and the computer which controls an image to be displayed on the display, to execute
a step of displaying on the display a money specifying information image which is an image including money specifying information which is comprised of numbers, characters, symbols or enumeration of two or more types of the numbers, the characters and the symbols, and which is information specifying money information which is information having monetary value,
wherein, in the step of displaying the money specifying information image on the display, the computer displays the money specifying information image on the display so that all the money specifying information is not displayed on the display at the same time.

FIG. 1

EP 3 543 932 A2

FIG. 2

FIG. 3

FIG. 4

EP 3 543 932 A2

FIG. 5

FIG. 6

Diagram components:
- CREDIT INFORMATION RECORDING UNIT — 224
- CREDIT DETERMINING UNIT — 223
- MAIN CONTROL UNIT — 222
- LOCATION INFORMATION RECORDING UNIT — 226
- FINAL DETERMINING UNIT — 225
- OTP INFORMATION RECORDING UNIT — 228
- OTP GENERATING UNIT — 227
- DATA INPUT/ OUTPUT UNIT — 221
- TRANSMITTING/ RECEIVING UNIT
- NETWORK
- CONTROL UNIT 220

| USER ID | PASSWORD | TERMINAL INFORMATION | BALANCE IN ACCOUNT (¥) |
|---|---|---|---|
| 12385adf0 | fai2fa60 | 123456789 | 10000000 |
| d2af1apfa | aofau554 | 012457854 | 2956002 |
| fd8a4op44 | mauoa365 | 658799365 | 1505612 |
| nm465fai3 | 009afaoi | 709658456 | 204550 |
| faio897a8 | pl36a7uf | 325778456 | 5002230 |
| . | . | . | . |
| . | . | . | . |
| . | . | . | . |
| . | . | . | . |
| . | . | . | . |
| . | . | . | . |
| . | . | . | . |
| 90afa45a5 | 5f0a65ak | 201147775 | 700445 |
| 21orz4651 | a4awktk0 | 123388440 | 0 |

FIG. 7

| SETTLEMENT TERMINAL ID | LOCATION INFORMATION | |
|---|---|---|
| 1 | 36° 18' 48. 3"N | 139° 21' 17. 5"E |
| 2 | 48° 34' 25. 3"N | 13° 24' 56. 8"E |
| 3 | 40° 44' 33. 2"N | 73° 59' 36. 1"W |
| 4 | — — — — — — — — — — — — — | |
| 5 | 33° 56' 41. 4"S | 151° 14' 46. 7"E |
| . | . | |
| . | . | |
| . | . | |
| . | . | |
| . | . | |
| . | . | |
| n − 1 | 41° 24' 14. 2"N | 2° 11' 09. 1"E |
| n | 22° 54' 37. 7"S | 43° 14' 27. 6"W |

FIG. 8

| USER ID | INITIAL VALUE | | THE NUMBER OF TIMES OF GENERATION |
|---|---|---|---|
| 12385adf0 | 001245533 | 123458899 | 12 |
| d2af1apfa | 178655336 | 458752225 | 233 |
| fd8a4op44 | 398756899 | 157846355 | 0 |
| nm465fai3 | 569869896 | 700002321 | 4501 |
| faio897a8 | 755003665 | 923658855 | 990 |
| ▪ | | ▪ | ▪ |
| ▪ | | ▪ | ▪ |
| ▪ | | ▪ | ▪ |
| ▪ | | ▪ | ▪ |
| ▪ | | ▪ | ▪ |
| ▪ | | ▪ | ▪ |
| ▪ | | ▪ | ▪ |
| 90afa45a5 | 4577778123 | 6356899677 | 9455 |
| 21orz4651 | 6898100021 | 3236955441 | 214651 |

FIG. 9

FIG. 10

FIG. 11

(A)

START
SETTLEMENT                OK

USER ID:
PASSWORD:
AMOUN (YEN):

(B)

START
SETTLEMENT                OK

USER ID:        d2af1apfa
PASSWORD:       aofau554
AMOUNT (YEN):   25, 000

FIG. 12

SETTLEMENT YOU REQUESTED
CANNOT BE MADE FOR
THE FOLLOWING REASON

☐USER ID IS WRONG
☑PASSWORD IS WRONG
☐NOT REGISTERED TERMINAL
☐INSUFFICIENT IN BALANCE

FIG. 13

(A)

FINAL
DETERMINATION ( OK )

USER ID: [                    ]

OTP: [                    ]

(B)

FINAL
DETERMINATION ( OK )

USER ID: [     d2af1apfa     ]

OTP: [  0 1 5 6 3 8 9 4 4 5 1  ]

FIG. 14

| USER TERMINAL | SETTLEMENT DEVICE | SETTLEMENT TERMINAL |
|---|---|---|

**START**

START PROCESSING OF SETTLEMENT (S911)

INPUT USER ID, PASSWORD AND AMOUNT INFORMATION (S912)

TRANSMIT USER ID, PASSWORD, AMOUNT INFORMATION AND LOCATION INFORMATION (S913) → RECEIVE USER ID, PASSWORD, AMOUNT INFORMATION AND LOCATION INFORMATION (S921)

EXECUTE CREDIT DETERMINATION (S922)

GENERATE TENTATIVE ALLOWANCE INFORMATION (S923)

RECEIVE TENTATIVE ALLOWANCE INFORMATION (S914) ← TRANSMIT TENTATIVE ALLOWANCE INFORMATION (S924)

GENERATE ONE-TIME PASSWORD (S915)

INPUT USER ID AND ONE-TIME PASSWORD (S931)

RECEIVE USER ID AND ONE-TIME PASSWORD (S925) ← TRANSMIT USER ID AND ONE-TIME PASSWORD (S932)

EXECUTE FINAL DETERMINATION (S926)

GENERATE FINAL DETERMINATION DATA (S927)

TRANSMIT FINAL DETERMINATION DATA (S928) → RECEIVE FINAL DETERMINATION DATA (S933)

DISPLAY RESULT OF SETTLEMENT (S934)

**END**

FIG. 15

EP 3 543 932 A2

(A)

SETTLEMENT
WHICH CAN BE            ( OK )
CANCELLED

☐    2015/9/15  19:21    ¥25,000

☐    2015/9/15  19:18    ¥2,600

(B)

SETTLEMENT
WHICH CAN BE            ( OK )
CANCELLED

☑    2015/9/15  19:21    ¥25,000

☐    2015/9/15  19:18    ¥2,600

FIG. 16

(A)

START
SETTLEMENT                    ( OK )

USER ID: [                    ]

PASSWORD: [                    ]

AMOUNT (YEN): [                    ]

PAYEE: [                    ]

(B)

START
SETTLEMENT                    ( OK )

USER ID: [ d2af1apfa ]

PASSWORD: [ aofau554 ]

AMOUNT (YEN): [ 25, 000 ]

PAYEE: [ ⑲ CAFE AA ]

FIG. 17

FIG. 18

FIG. 19

FIG. 20

FIG. 21

(A)

(B)

(C)

FIG. 22

FIG. 23

FIG. 24

EP 3 543 932 A2

(A)

(B)

OTP1 : 015638

101

F

OTP1 : 015638

I5A

I5B

I5A

I5A

F

I5A

OTP2 : 94451

101

I5B

F

I5A

I5B

FIG. 25

FIG. 26

EP 3 543 932 A2

(A)

OTP

OTP1

I7A OTP2

OTP3   I7B

F

I7   101

(B)

OTP

OTP1

I7A OTP2

OTP3   I7B

0 1 5 6

F

I7   101

FIG. 27

FIG. 28

EP 3 543 932 A2

(A)　　　　　　　(B)　　　　　　　(C)

FIG. 29

FIG. 30

(A)

OTP1

OTP2

(B)

OTP1

OTP2

(C)

OTP1

OTP2

FIG. 31

EP 3 543 932 A2

FIG. 32

EP 3 543 932 A2

FIG. 33

FIG. 34

## REFERENCES CITED IN THE DESCRIPTION

**Patent documents cited in the description**

- JP 2015243564 A
- JP 2015250700 A
- JP 2015256028 A